# EUROPEAN PATENT APPLICATION

(11) **EP 4 728 852 A1**
(43) Date of publication of application: **22.04.2026**
(21) Application number: 24823284.5
(22) Date of filing: 05.06.2024
(51) Int. Cl.: A01G 23/08

(54) **FELLING WORK VEHICLE**

(30) Priority: 16.06.2023 JP 2023099558
(71) Applicant: Matsumoto System Engineering Co. Ltd., Fukuoka 811-2414 (JP)
(72) Inventor: MATSUMOTO, Ryozo, Kasuya-gun, Fukuoka 811-2414 (JP)
(74) Representative: Müller-Boré & Partner Patentanwälte PartG mbB
(86) International application number: PCT/JP2024/020504
(87) International publication number: WO 2024/257665

(57) **Abstract**

The present invention is a felling work vehicle (1) including: a vehicle body (2); traveling devices (4); a rotary frame (6) disposed between these traveling devices, and having a recessed portion (6a) that receives, a standing tree; a grapple device (8) coupled to the rotary frame, and including grapples configured to hold the standing tree, which is received in the recessed portion of the rotary frame; and a cutting device (12) configured to cut the standing tree, at a position lower than the grapples, wherein the rotary frame is attached to the vehicle body so as to be rotatable about a rotation axis (6b), the rotation axis being positioned to be located forward of the standing tree, which is held by the grapple device, with respect to the vehicle body, and the standing tree is felled toward the front of the vehicle body by rotating the rotary frame.

## Description

### [Technical Field]

The present invention relates to a felling work vehicle, and particularly relates to a felling work vehicle that fells a standing tree.

### [Background Art]

Japanese Patent No. 7125330 (Patent Literature 1) describes a self-propelled tree felling and transporting machine. This self-propelled tree felling and transporting machine includes a rotation frame and a device in the inner space of a tire-type or crawler type traveling vehicle body structure, the rotation frame including a grapple device and a cutting device, the grapple device including a pair of grapples for grasping and holding a standing tree from the sides, the cutting device being configured to cut the standing tree from the side to fell the standing tree, the device being configured to rotate the rotation frame between the vertical position and the horizontal position of the grapple device and the cutting device, and after the standing tree is felled, the tree felling and transporting machine is configured to transport the tree felled by the grapples of grapple device as the machine travels.

In this self-propelled tree felling and transporting machine, a standing tree to be felled is grasped and held by the grapple device from the sides and, in such a state, the standing tree is cut by the cutting device from the side. After the standing tree is cut, in the state in which the cut standing tree is held by the grapple device, the rotation frame is rotated from the vertical position to the horizontal position to fell the standing tree, and the traveling vehicle body is then caused to travel in order to transport the tree.

### [Citation List]

### [Patent Literature]

[Patent Literature 1]
Japanese Patent No. 7125330

### [Summary of Invention]

### [Technical Problem]

However, the self-propelled tree felling and transporting machine described in Patent Literature 1 has a problem that, when a cut standing tree is felled in a state of being held by the grapple device, a felling direction of the standing tree is unstable. That is, when a standing tree in a state of being held by the grapple device is felled, the standing tree is felled in a state in which the stump on the lower side is in contact with the upper portion of the cut tree and hence, there is a concern that the fulcrum of the standing tree to be felled may become unstable, causing the tree to be felled in an unintentional direction. In addition, depending on the diameter of a standing tree to be felled or the inclination of land on which felling work is performed, there may be cases in which a lifting force is exerted on the standing tree to be felled, and therefore the entire felling and transporting machine, including the grapple device holding the standing tree, is lifted, thereby lifting the front portion of the felling and transporting machine. To suppress such lifting of the felling and transporting machine, the felling and transporting machine is required to have a certain size and mass, making it difficult to reduce the size and weight of the felling and transporting machine.

Accordingly, it is an object of the present invention to provide a felling work vehicle that can safely fell a cut standing tree in a stable direction.

### [Solution to Problem]

To solve the above-described problem, the present invention is directed to a felling work vehicle that fells a standing tree, the felling work vehicle including: a vehicle body; a pair of traveling devices provided on both sides of the vehicle body in a width direction; a rotary frame disposed between the pair of traveling devices, and having a recessed portion that receives, from a front side, the standing tree to be felled; a grapple device connected to the rotary frame, including a grapple configured to grasp the standing tree to be felled from a side, with the standing tree received in the recessed portion of the rotary frame; and a cutting device configured to cut the standing tree, which is held by the grapple device, at a position lower than the grapple, wherein the rotary frame is mounted to the vehicle body so as to be rotatable about a rotation axis extending in the width direction of the vehicle body, the rotation axis being positioned forward of the standing tree held by the grapple device relative to the vehicle body, and the standing tree, once cut, is lifted and felled toward the front of the vehicle body by rotation of the rotary frame.

In the present invention having such a configuration, in a state in which a standing tree to be felled is received in the recessed portion of the rotary frame, the standing tree is held by the grapple device. Next, the held standing tree is cut by the cutting device at a position lower than the grapple. After the standing tree is cut, in a state in which the standing tree is held by the grapple device, the rotary frame is rotated about the rotation axis, thereby causing the cut standing tree to be felled toward the front of the vehicle body.

According to the present invention having such a configuration, the rotation axis, about which the rotary frame is rotated when a standing tree is felled, is located forward of the standing tree, which is held by the grapple device, with respect to the vehicle body. Therefore, the cut standing tree is lifted up from the stump by rotating the rotary frame, and therefore the standing tree held by the grapple device is reliably felled by using the rotation axis of the rotary frame as a fulcrum. As a result, the felling direction of the cut standing tree can be made stable, so that felling work can be safely performed.

In the present invention, it is preferable that the felling work vehicle further include a rotary arm configured to support the grapple device, and the rotary arm be attached to the rotary frame so as to be rotatable about an axis extending in the width direction of the vehicle body, and support the grapple device at a position above the rotary frame.

According to the present invention having such a configuration, the grapple device is supported by the rotary arm that is rotatable about the axis extending in the width direction of the vehicle body and hence, the grapple of the grapple device can also be brought into contact, at a substantially right angle, with a standing tree growing on a slope, so that the standing tree can be reliably held by the grapple device.

In the present invention, it is preferable that the felling work vehicle further include a rotary arm configured to support the grapple device, and the rotary arm be attached to the rotary frame so as to be rotatable about an axis extending in a front-rear direction of the vehicle body, and support the grapple device at a position above the rotary frame.

According to the present invention having such a configuration, the grapple device is supported by the rotary arm that is rotatable about the axis extending in the front-rear direction of the vehicle body and hence, the grapple of the grapple device can also be brought into contact, at a substantially right angle, with a standing tree growing on a slope inclined in the left-right direction of the vehicle body, so that the standing tree can be reliably held by the grapple device.

In the present invention, it is preferable that the grapple device be attached to the rotary arm via a universal support mechanism, and the universal support mechanism allow the grapple device to rotate relative to the rotary arm about a predetermined axis.

According to the present invention having such a configuration, the universal support mechanism allows the grapple device to rotate relative to the rotary arm and hence, the direction of the grapple device can be easily aligned with the direction of a standing tree to be held, so that the standing tree can be reliably held.

In the present invention, it is preferable that the universal support mechanism elastically support the grapple device so as to allow the grapple device to rotate relative to the rotary arm about the predetermined axis.

According to the present invention having such a configuration, the universal support mechanism elastically supports the grapple device in such a way as to allow the grapple device to rotate and hence, an elastic force that returns the grapple device to the original direction is exerted on the grapple device. Consequently, after a standing tree held by the grapple device is cut, the grapple device is returned to the original direction by the elastic force, and therefore the direction of the held standing tree can be made stable.

In the present invention, it is preferable that the rotary arm be configured to be extendable such that the grapple device is spaced apart from the rotary frame.

According to the present invention having such a configuration, the rotary arm is configured to be extendable, and the grapple device is spaced apart from the rotary frame and hence, when the felled standing tree is transported, the root of the felled standing tree is distant from the front portion of the felling work vehicle. As a result, when the felling work vehicle in a state of transporting the standing tree turns or the like, the front portion of the felling work vehicle is less likely to interfere with the root of the standing tree and hence, transporting work is facilitated.

In the present invention, it is preferable that the cutting device be configured to cut the standing tree to be felled, at a position lower than the rotation axis.

According to the present invention having such a configuration, the cutting device cuts a standing tree to be felled at a position lower than the rotation axis and hence, also in a case in which the standing tree has a large diameter, the cut standing tree is reliably lifted up from the stump when the standing tree is felled, so that contact between the cut standing tree and the stump can be reliably avoided. Consequently, the felling direction of the standing tree can be made more stable.

In the present invention, it is preferable that the felling work vehicle further include a torque applying device, and when the standing tree, once cut, is felled by rotating the rotary frame, the torque applying device apply torque to the rotary frame in a direction opposite to a felling direction of the standing tree to reduce a felling speed of the standing tree.

According to the present invention having such a configuration, the felling speed of a standing tree is reduced by the torque applying device and hence, the cut standing tree can be slowly felled, and therefore it is possible to prevent the occurrence of an overturning accident of the felling work vehicle and damage to the device caused by a reaction force exerted on the vehicle during felling.

In the present invention, it is preferable that the felling work vehicle further include a winch configured to assist traveling of the traveling device, and a drum of the winch be configured to unwind or wind a wire rope in synchronization with the traveling device.

According to the present invention having such a configuration, the drum of the winch unwinds or winds the wire rope in synchronization with the traveling device and hence, when the felling work vehicle travels with assistance from the winch, significant loosening of the wire rope and lifting of one end of the felling work vehicle caused by the wire rope pulling the felling work vehicle can be prevented, thereby allowing the felling work vehicle to travel stably.

In the present invention, it is preferable that the felling work vehicle further include a prime mover configured to generate power that actuates the traveling device, and the prime mover be supported on the vehicle body so as to be rotatable about a substantially horizontal axis.

According to the present invention having such a configuration, the prime mover is supported on the vehicle body in such a way as to be rotatable about the substantially horizontal axis and hence, also in a case in which felling work is performed on inclined ground by the felling work vehicle, the prime mover can be maintained in a state close to horizontal, so that the prime mover can be reliably operated.

In the present invention, it is preferable that the cutting device be a chain saw rotatably attached to the rotary frame.

According to the present invention having such a configuration, the cutting device is a chain saw and hence, tree species that cannot be cut with a cutter blade can also be cut, and the weight of the cutting device can be reduced.

In the present invention, it is preferable that the grapple device be configured such that also in a case in which the standing tree to be felled grows on an upslope or a downslope, the grapple device is capable of holding the standing tree with the rotary frame maintained substantially parallel to the upslope or the downslope, and the cutting device be configured to cut the standing tree in a plane substantially parallel to the rotary frame.

According to the present invention having such a configuration, the grapple device is configured such that also in the case in which a standing tree grows on an upslope or a downslope, the grapple device is capable of holding the standing tree with the rotary frame maintained substantially parallel to the upslope or the downslope and hence, also in the case in which the standing tree grows on the slope, the standing tree can be cut at a low position along a direction substantially parallel to the slope. As a result, the stump obtained after the standing tree is felled can have a low height and hence, when the standing tree is felled and then a next standing tree is felled, the stump is less likely to hinder next felling work, so that felling work can proceed smoothly.

In the present invention, it is preferable that the grapple device be configured such that also in a case in which the standing tree to be felled grows on a slope inclined in a left-right direction of the vehicle body, the grapple device is capable of holding the standing tree, and the cutting device be configured to cut the standing tree held by the grapple device.

According to the present invention having such a configuration, the grapple device can also hold the standing tree growing on the slope inclined in the left-right direction of the vehicle body and hence, felling work can be performed without aligning the front-rear direction of the vehicle body with the inclination direction of the slope, so that felling work can proceed smoothly.

In the present invention, it is preferable that the grapple device be configured such that also in a case in which the standing tree to be felled grows on a slope inclined in the front-rear direction of the vehicle body and also inclined in the left-right direction of the vehicle body, the grapple device is capable of holding the standing tree, and the cutting device be configured to cut the standing tree held by the grapple device.

According to the present invention having such a configuration, also in the case in which the standing tree grows on the slope inclined in the front-rear direction of the vehicle body (inclined upward or downward) and also inclined in the left-right direction, the standing tree can be held and hence, in most cases, felling work can be performed without aligning the inclination direction of the slope with the direction of the vehicle body, so that felling work can proceed smoothly.

### [Advantageous Effect of Invention]

According to the felling work vehicle of the present invention, a cut standing tree can be safely felled in a stable direction.

### [Brief Description of Drawings]

[Figure 1] Figure 1 is a side view of a felling work vehicle according to a first embodiment of the present invention.
[Figure 2] Figure 2 is a top plan view of the felling work vehicle according to the first embodiment of the present invention.
[Figure 3] Figure 3 is a front view of the felling work vehicle according to the first embodiment of the present invention.
[Figure 4] Figure 4 is an enlarged view of a rotary frame and a driving mechanism for the rotary frame in a state of being removed from the felling work vehicle according to the first embodiment of the present invention, the rotary frame and the driving mechanism being included in the felling work vehicle.
[Figure 5] Figure 5 is a front view showing, in an enlarged manner, a grapple device and the like in a state of being removed from the felling work vehicle according to the first embodiment of the present invention, the grapple device and the like being included in the felling work vehicle.
[Figure 6] Figure 6 is a top plan view showing the grapple device with grapples being in an open state, the grapple device being included in the felling work vehicle according to the first embodiment of the present invention.
[Figure 7] Figure 7 is a top plan view showing the grapple device in a state of holding a standing tree, the grapple device being included in the felling work vehicle according to the first embodiment of the present invention.
[Figure 8] Figure 8 is a top plan view showing the grapple device with the grapples being in a folded state, the grapple device being included in the felling work vehicle according to the first embodiment of the present invention.
[Figure 9] Figure 9 is a cross-sectional view of the felling work vehicle according to the first embodiment of the present invention, taken along line IX-IX in Figure 6.
[Figure 10] Figure 10 is a diagram showing a work procedure in which a standing tree is felled and transported on flat ground by the felling work vehicle of the first embodiment of the present invention.
[Figure 11] Figure 11 is a diagram showing the work procedure in which the standing tree is felled and transported on the flat ground by the felling work vehicle of the first embodiment of the present invention.
[Figure 12] Figure 12 is a diagram showing the work procedure in which the standing tree is felled and transported on the flat ground by the felling work vehicle of the first embodiment of the present invention.
[Figure 13] Figure 13 is a diagram showing the work procedure in which the standing tree is felled and transported on the flat ground by the felling work vehicle of the first embodiment of the present invention.
[Figure 14] Figure 14 is a diagram showing the work procedure in which the standing tree is felled and transported on the flat ground by the felling work vehicle of the first embodiment of the present invention.
[Figure 15] Figure 15 is a diagram showing a work procedure in which a standing tree is felled on an upslope by the felling work vehicle of the first embodiment of the present invention.
[Figure 16] Figure 16 is a diagram showing the work procedure in which the standing tree is felled on the upslope by the felling work vehicle of the first embodiment of the present invention.
[Figure 17] Figure 17 is a diagram showing the work procedure in which the standing tree is felled on the upslope by the felling work vehicle of the present embodiment.
[Figure 18] Figure 18 is a diagram showing a work procedure in which a standing tree is felled on a downslope by the felling work vehicle of the first embodiment of the present invention.
[Figure 19] Figure 19 is a diagram showing the work procedure in which the standing tree is felled on the downslope by the felling work vehicle of the first embodiment of the present invention.
[Figure 20] Figure 20 is a diagram showing the work procedure in which the standing tree is felled on the downslope by the felling work vehicle of the first embodiment of the present invention.
[Figure 21] Figure 21 is a side view of a felling work vehicle according to a second embodiment of the present invention, and shows a range within which a rotary frame can be rotated.
[Figure 22] Figure 22 is a side view of the felling work vehicle according to the second embodiment of the present invention, and shows a range within which a rotary arm can be rotated in a pitch direction.
[Figure 23] Figure 23 is a front view of the felling work vehicle according to the second embodiment of the present invention.
[Figure 24] Figure 24 is a side view showing, in an enlarged manner, a connection portion between the rotary frame and the rotary arm of the felling work vehicle according to the second embodiment of the present invention.
[Figure 25A] Figure 25A is a side view of a swing pin that connects the rotary frame and the rotary arm, which are included in the felling work vehicle according to the second embodiment of the present invention.
[Figure 25B] Figure 25B is a top plan view of the swing pin that connects the rotary frame and the rotary arm, which are included in the felling work vehicle according to the second embodiment of the present invention.
[Figure 25C] Figure 25C is a front view of the swing pin that connects the rotary frame and the rotary arm, which are included in the felling work vehicle according to the second embodiment of the present invention.
[Figure 26] Figure 26 is a diagram showing felling work of a standing tree on a slope with a lateral gradient by the felling work vehicle of the second embodiment of the present invention.
[Figure 27] Figure 27 is a diagram showing felling work of a standing tree on a downslope by the felling work vehicle of the second embodiment of the present invention.
[Figure 28] Figure 28 is a diagram showing felling work of a standing tree on an upslope by the felling work vehicle of the second embodiment of the present invention.

### [Description of Embodiments]

Next, a felling work vehicle according to a first embodiment of the present invention will be described with reference to attached drawings.

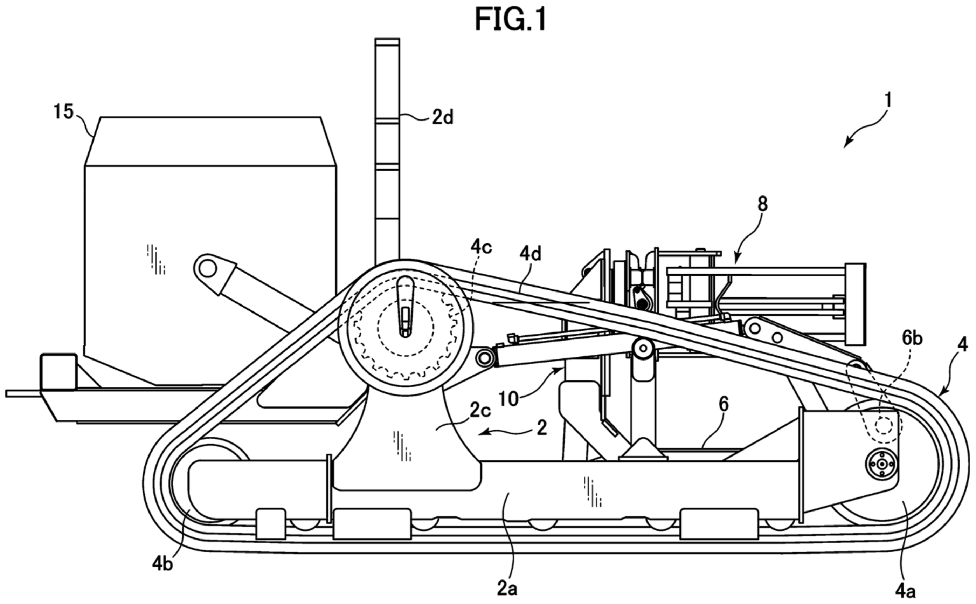

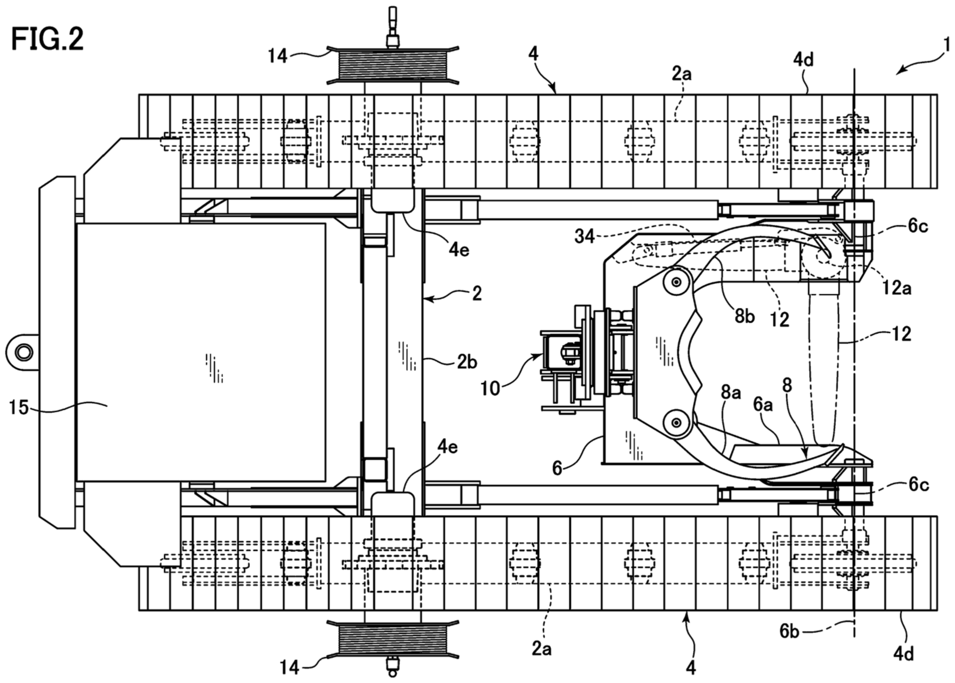

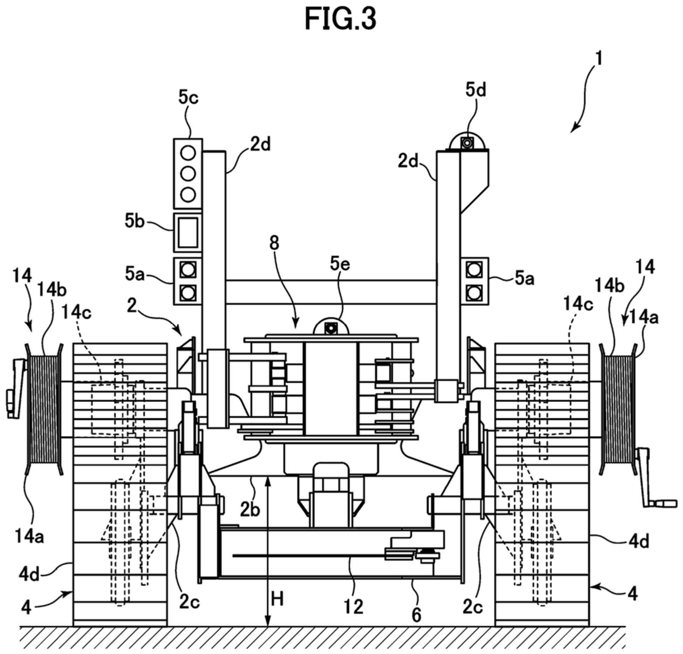

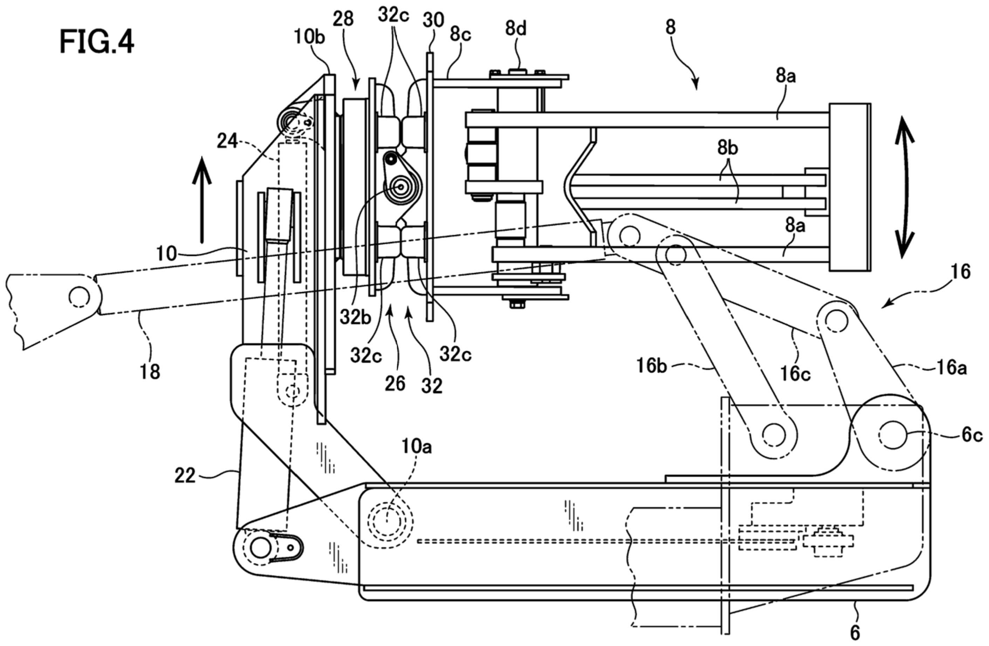

Figure 1 is a side view of the felling work vehicle according to the first embodiment of the present invention. Figure 2 is a top plan view of the felling work vehicle according to the first embodiment of the present invention. Figure 3 is a front view of the felling work vehicle according to the first embodiment of the present invention. Figure 4 is an enlarged view of a rotary frame and a driving mechanism for the rotary frame in a state of being removed from the felling work vehicle according to the first embodiment of the present invention, the rotary frame and the driving mechanism being included in the felling work vehicle.

As shown in Figure 1 and Figure 2, a felling work vehicle 1 according to the first embodiment of the present invention includes a vehicle body 2, a pair of traveling devices 4, and a rotary frame 6, the pair of traveling devices 4 being provided on both sides of the vehicle body 2 in the width direction, the rotary frame 6 being disposed between the traveling devices 4. A grapple device 8 is coupled to the rotary frame 6 via a rotary arm 10, the grapple device 8 being configured to grasp a standing tree to be felled. A chain saw 12 (Figure 2) is attached to the rotary frame 6, the chain saw 12 being a cutting device that cuts the standing tree held by the grapple device 8. In addition, winches 14 (Figure 3) for towing the vehicle body are provided at both side portions of the vehicle body 2, and an engine 15 is mounted at the rear portion of the vehicle body 2, the engine 15 being a prime mover that generates power for actuating the traveling device 4 and the like.

As shown in Figure 2, the vehicle body 2 is a frame having a substantially H shape as viewed from above, and includes two longitudinal members 2a and a transverse member 2b, the two longitudinal members 2a extending in parallel in the front-rear direction of the felling work vehicle 1, the transverse member 2b extending in the width direction between these longitudinal members 2a. The longitudinal members 2a and the transverse member 2b extend in a substantially horizontal direction. As shown in Figure 3, two coupling members 2c extend obliquely downward from both ends of the transverse member 2b to form a chevron shape, thereby coupling the transverse member 2b to the longitudinal members 2a, which are disposed on both sides of the transverse member 2b. Consequently, a height H from the ground contact surface of the felling work vehicle 1 to the transverse member 2b (Figure 3) is ensured to be approximately 520 mm, so that felling and transportation of trees can be smoothly performed up and down along a slope during line thinning.

In this specification, terms indicating directions, such as "front-rear direction", "up-down direction", "horizontal direction", and "vertical direction", indicate respective directions with reference to the felling work vehicle 1 in the reference state shown in Figure 1, disposed on a horizontal ground. In the present embodiment, the right side in Figure 1 corresponds to the front of the felling work vehicle 1, and the left side in Figure 1 corresponds to the rear of the felling work vehicle 1.

As shown in Figure 2, the traveling devices 4 are provided on both sides of the vehicle body 2 in the width direction along the respective longitudinal members 2a of the vehicle body 2. That is, as shown in Figure 1, each traveling device 4 includes a front driven wheel 4a, a rear driven wheel 4b, and a driving sprocket 4c, the front driven wheel 4a being rotatably provided at the front end of each longitudinal member 2a, the rear driven wheel 4b being rotatably provided at the rear end of each longitudinal member 2a, the driving sprocket 4c being provided at the upper end of each coupling member 2c. The front driven wheel 4a, the rear driven wheel 4b, and the driving sprocket 4c are disposed to form a triangular shape as viewed from the side, and a crawler 4d is wound around these components to form a triangular shape. Therefore, loosening of the crawler 4d can be reduced during both forward movement and rearward movement. Traveling motors 4e (Figure 2) are respectively connected to the driving sprockets 4c, the traveling motors 4e being driven by hydraulic pressure generated by the engine 15.

By rotationally driving the respective driving sprockets 4c with the traveling motors 4e, the traveling devices 4 enable forward movement, rearward movement, and turning of the felling work vehicle 1. In the present embodiment, each driving sprocket 4c is independently driven, and a skid steering allows turning in place. The felling work vehicle 1 of the present embodiment has a total length of approximately 3700 mm, a total height of approximately 1520 mm, a total width of approximately 2200 mm, and a weight of approximately 3.0 t. Consequently, the ground contact pressure of the felling work vehicle 1 is approximately 135 g/cm² or less, thereby causing only slight sinking and allowing the felling work vehicle 1 to also climb and travel on fragile soil, such as Andosols that cover most of the mountain forests in Japan. The felling work vehicle 1 of the present embodiment can also climb a slope of approximately 45 degrees. Although a crawler type traveling devices are adopted as the traveling devices 4 in the present embodiment, wheels may be used as the traveling devices 4.

As shown in Figure 3, poles 2d extending vertically upward are provided at both ends of the transverse member 2b. Lights 5a, a speaker 5b, a safety light 5c, and a vehicle body camera 5d are provided on the poles 2d. In addition, a proximity camera 5e is provided at the upper portion of the grapple device 8.

The lights 5a are configured to emit light toward the front and rear of the felling work vehicle 1. In the present embodiment, four lights 5a that emit light toward the front of the felling work vehicle 1 and four lights 5a that emit light toward the rear of the felling work vehicle 1, that is, eight lights in total, are provided (only four lights being shown in Figure 3).

The speaker 5b is provided to output, from the felling work vehicle 1, the voice of an operator performing felling work from a remote location. As will be described later, the operator performing felling work operates the felling work vehicle 1 from a remote location using a controller (not shown in the drawing) located near the operator. The speaker 5b is configured to output, from the felling work vehicle 1, voice picked up by a microphone (not shown in the drawing) of the controller (not shown in the drawing). Consequently, instructions or the like from the operator operating the controller (not shown in the drawing) can be easily transmitted to other operators located relatively close to the felling work vehicle 1.

The safety light 5c is configured to change the illumination color based on the working condition of the felling work vehicle 1, thereby communicating the condition to a nearby operator and providing an alert. For example, when any abnormality is detected, the safety light 5c is illuminated in red.

The vehicle body camera 5d is configured to image the surroundings of the felling work vehicle 1, and to display the imaged image on the controller (not shown in the drawing) located near the operator. The vehicle body camera 5d is attached in such a way as to be rotatable about the vertical axis and hence, it is possible to image the front and rear of the felling work vehicle 1. With such a configuration, the operator can remotely operate the felling work vehicle 1 while accurately recognizing the situation around the felling work vehicle 1.

The proximity camera 5e is provided at the upper portion of the grapple device 8, and is configured to image a standing tree to be felled and the like. Consequently, the operator can accurately recognize the state of the standing tree to be felled, and can reliably hold the standing tree with the grapple device 8 also when the felling work vehicle 1 is operated remotely.

The present invention may also be configured such that the images imaged by the vehicle body camera 5d and the proximity camera 5e are displayed on goggles (not shown in the drawing) that the operator wears. The present invention may also be configured such that a stereoscopic video is used as the image to be displayed, and when the operator moves the head, a video corresponding to the movement of the head is displayed on the goggles. By displaying the stereoscopic video on the goggles, the operator can obtain a sense of distance. Further, a video in the direction in which the operator turns the head is displayed in real time and hence, the operator can operate the felling work vehicle 1 with a sense as if performing the work on site, even though the operator is at a remote location. The present invention may also be configured such that, when another operator or the like enters the field of view of the vehicle body camera 5d or the proximity camera 5e, an alarm is issued to alert the operator operating the felling work vehicle 1.

As shown in Figure 2, the rotary frame 6 is a member disposed between the respective traveling devices 4 (between the respective longitudinal members 2a), and formed to have a substantially U shape as viewed from above, and the rotary frame 6 has a recessed portion 6a that receives a standing tree to be felled from the front of the felling work vehicle 1. This rotary frame 6 is attached to the vehicle body 2 in such a way as to be rotatable about a rotation axis 6b extending horizontally in the width direction of the vehicle body 2. That is, the rotary frame 6 having a substantially U shape is rotatably supported on the vehicle body 2 by support shafts 6c at the front end portions of leg parts, which are disposed on both sides of the rotary frame 6.

As shown in Figure 4, a link mechanism 16 and a tilt hydraulic cylinder 18 are coupled to the rotary frame 6, the link mechanism 16 being formed of three links 16a, 16b, and 16c, the tilt hydraulic cylinder 18 being connected to the link mechanism 16. The link mechanism 16 and the tilt hydraulic cylinder 18 are provided on each side of the rotary frame 6. By extending or retracting the tilt hydraulic cylinders 18 with hydraulic pressure generated by the engine 15, the rotary frame 6 can be rotated about the rotation axis 6b.

To be more specific, the link 16a that constitutes the link mechanism 16 is rotatably attached to the support shaft 6c of the rotary frame 6, thereby being attached to the rotary frame 6. The link 16b is rotatably attached to the front end portion of the longitudinal member 2a of the vehicle body 2 at a position rearward of the link 16a. The link 16c is rotatably attached to the links 16a and 16b in such a way as to couple the distal ends of the links 16a and 16b. Further, the tilt hydraulic cylinder 18 extends in the front-rear direction in such a way as to couple the transverse member 2b of the vehicle body 2 to the rear end of the link 16c. Consequently, when the tilt hydraulic cylinders 18 are caused to extend or retract, the links 16a are rotated about the support shaft 6c, and the rotary frame 6 is also rotated together with the links 16a. As a result, the rotary frame 6 can be rotated forward via the link mechanisms 16 from the reference state of the felling work vehicle 1 shown in Figure 1.

In the present embodiment, the rotary frame 6 is oriented in the substantially horizontal direction in the reference state of the felling work vehicle 1 shown in Figure 1, and the rotary frame 6 can be rotated forward by 165 degrees from this state. The maximum diameter of the root portion of a standing tree that the felling work vehicle 1 of the present embodiment can fell is approximately 50 cm. As will be described later, also in a state in which a standing tree having such a maximum diameter is received in the recessed portion 6a of the rotary frame 6, and is held by the grapple device 8, the rotation axis 6b of the rotary frame 6 is located forward of the standing tree with respect to the vehicle body 2. After the standing tree held by the grapple device 8 is cut with the chain saw 12, by rotating the rotary frame 6 forward about the rotation axis 6b, the cut standing tree can be felled toward the front of the vehicle body 2.

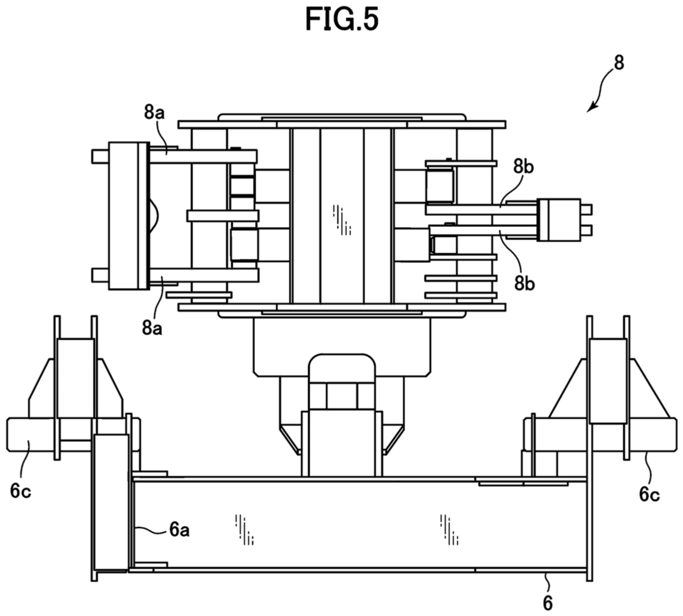

Next, the configuration of the grapple device will be described with new reference to Figure 5 to Figure 8.

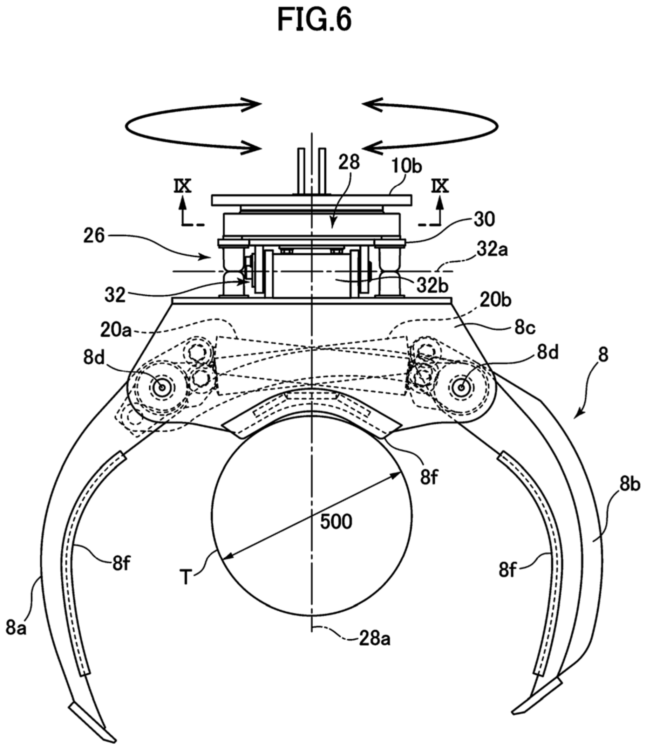

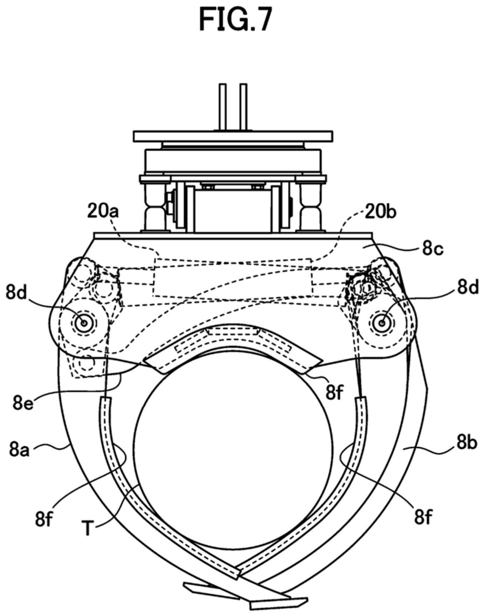

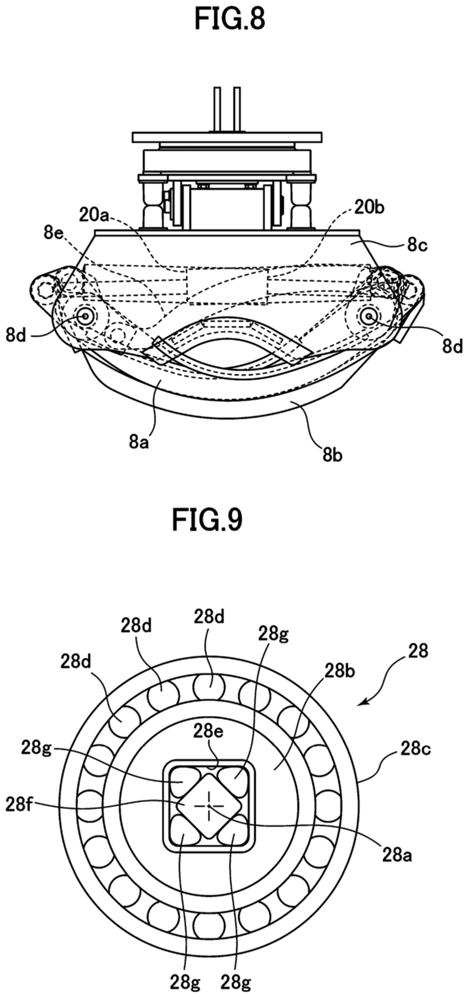

Figure 5 is a front view showing, in an enlarged manner, the grapple device and the like in a state of being removed from the felling work vehicle according to the first embodiment of the present invention, the grapple device and the like being included in the felling work vehicle. Figure 6 to Figure 8 are top plan views showing, in an enlarged manner, the grapple device and the like in a state of being removed from the felling work vehicle according to the first embodiment of the present invention, the grapple device and the like being included in the felling work vehicle, wherein Figure 6 shows grapples in an open state, Figure 7 shows the grapple device in a state of holding a standing tree, and Figure 8 shows the grapples in a folded state.

As shown in Figure 5 to Figure 8, the grapple device 8 includes two grapples 8a and 8b that extend forward, and that are configured to be capable of being opened and closed. These grapples 8a and 8b grasp and hold, from the sides, a standing tree T to be felled that is received in the recessed portion 6a of the rotary frame 6. That is, the respective grapples 8a and 8b are rotatably attached to a grapple device body 8c via support shafts 8d. Each of the grapples 8a and 8b is formed to have a substantially arc shape that is curved inward as viewed in a plan view. By rotating the respective grapples 8a and 8b in a direction in which the distal ends of the respective grapples 8a and 8b approach from the state shown in Figure 6, the grapples 8a and 8b can hold the standing tree T as shown in Figure 7. When the grapple device 8 is not in use, as shown in Figure 8, the grapples 8a and 8b can be rotated and folded to a position at which the grapples 8a and 8b overlap with each other.

In the reference state of the felling work vehicle 1 shown in Figure 1, the respective support shafts 8d of the grapple device 8 are oriented in the substantially vertical direction, and the respective grapples 8a and 8b are rotated about these support shafts 8d in a horizontal plane. As shown in Figure 5, each of the grapples 8a and 8b is constituted of two plate-like members. Two plate-like members that form the grapple 8a shown on the left side in Figure 5 are spaced apart from each other by a large distance in the up-down direction, whereas two plate-like members that form the grapple 8b shown on the right side in Figure 5 are spaced apart from each other by a small distance in the up-down direction. With this configuration, when the respective grapples 8a and 8b are in a state of intersecting with each other, the two plate-like members that form the grapple 8b enter the space formed between the two plate-like members that form the grapple 8a (Figure 7 and Figure 8).

As shown in Figure 6, opening and closing hydraulic cylinders 20a and 20b are coupled to the proximal end portions of the respective grapples 8a and 8b. By extending or retracting the opening and closing hydraulic cylinders 20a and 20b, the grapples 8a and 8b can be rotated from the open state shown in Figure 6 to a state in which the grapples 8a and 8b hold a standing tree (Figure 7), and subsequently to a folded state (Figure 8).

In other words, the opening and closing hydraulic cylinder 20a extends in the width direction of the grapple device 8 in such a way as to connect the proximal end portion of the grapple 8a to the grapple device body 8c. The opening and closing hydraulic cylinder 20b extends in the width direction of the grapple device 8 in such a way as to connect the proximal end portion of the grapple 8b to the grapple device body 8c. With such a configuration, when the respective opening and closing hydraulic cylinders 20a and 20b are caused to extend from the state shown in Figure 6, the proximal end portions of the respective grapples 8a and 8b are moved outward in the width direction, so that the respective grapples 8a and 8b are rotated about the support shafts 8d (Figure 6 → Figure 7 → Figure 8).

A synchronizing link 8e is also provided in such a way as to extend in the width direction of the grapple device 8. This synchronizing link 8e is configured to couple a portion of the proximal end portion of the grapple 8a, located forward of the support shaft 8d, to a portion of the proximal end portion of the grapple 8b, located rearward of the support shaft 8d. By providing the synchronizing link 8e, when the respective grapples 8a and 8b are opened and closed, the respective grapples 8a and 8b are rotated in synchronism (the grapple 8a and the grapple 8b are rotated by substantially the same angle).

As shown in Figure 6, anti-slip members 8f are provided on the inner sides of the respective grapples 8a and 8b and on the front side of the grapple device body 8c. A standing tree T held by the grapple device 8 comes into contact with the respective anti-slip members 8f, so that slippage of the standing tree T relative to the respective grapples 8a and 8b is suppressed. Consequently, a cut standing tree T or a cut standing tree T in transportation does not easily slip relative to the respective grapples 8a and 8b.

Next, as shown in Figure 4, the grapple device 8 is supported via the rotary arm 10 attached to the rotary frame 6. That is, the rotary arm 10 is rotatably attached to the rear end portion of the rotary frame 6, and extends substantially vertically upward in the reference state of the felling work vehicle 1 shown in Figure 1. The grapple device body 8c of the grapple device 8 is attached to the upper end portion of the rotary arm 10. Accordingly, the rotary arm 10 supports the grapple device 8 at a position above the rotary frame 6.

The rotary arm 10 is attached to the rotary frame 6 by a support shaft 10a extending horizontally in the width direction of the felling work vehicle 1. By rotating the rotary arm 10 relative to the rotary frame 6, the grapple device 8 attached to the rotary arm 10 can be oriented in a desired direction. To be more specific, a dump hydraulic cylinder 22 is provided to couple the rear end portion of the rotary frame 6 to the back surface side of the rotary arm 10, and by extending or retracting this dump hydraulic cylinder 22, the rotary arm 10 can be rotated relative to the rotary frame 6 about the support shaft 10a.

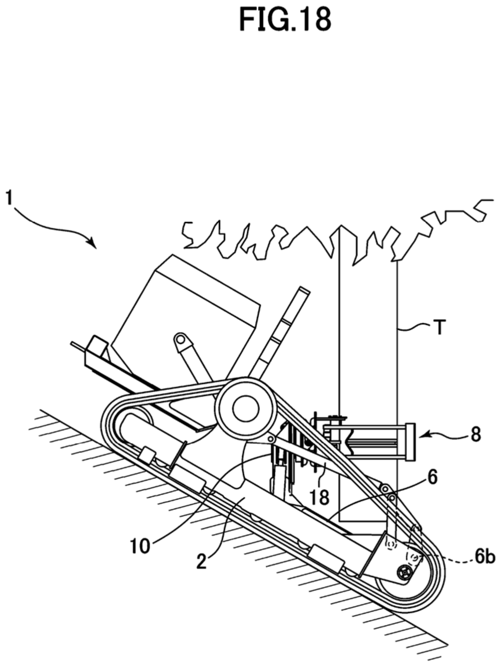

In the reference state of the felling work vehicle 1 shown in Figure 1, the rotary frame 6 and the rotary arm 10 form a substantially right angle, and the rotary arm 10 extends substantially vertically upward. By retracting the dump hydraulic cylinder 22 from this state, the rotary arm 10 is rotated toward the rear of the felling work vehicle 1. In the present embodiment, the rotary arm 10 can be rotated rearward by approximately 45 degrees and, in this state, an angle formed by the rotary frame 6 and the rotary arm 10 is approximately 135 degrees as viewed from the side (Figure 18).

A slide plate 10b is attached to the front surface side of the rotary arm 10, and the above-described grapple device 8 is attached to this slide plate 10b. The slide plate 10b is configured to be slidable along the rotary arm 10. That is, a guide mechanism (not shown in the drawing) that guides the slide plate 10b is provided to the rotary arm 10, and the slide plate 10b is supported by this guide mechanism in such a way as to be slidable relative to the rotary arm 10.

A slide hydraulic cylinder 24 is further attached between the rotary arm 10 and the slide plate 10b and, by extending or retracting this slide hydraulic cylinder 24, the slide plate 10b is moved in a direction parallel to and along the rotary arm 10. That is, by extending the slide hydraulic cylinder 24 from the reference state of the felling work vehicle 1 shown in Figure 1, the slide plate 10b is slid, thereby causing the rotary arm 10 to extend. Consequently, the grapple device 8 attached to the rotary arm 10 is moved upward so as to be spaced apart from the rotary frame 6. By rotating the rotary frame 6 and the rotary arm 10 to slide the slide plate 10b in this manner, the grapple device 8 attached to the slide plate 10b can be positioned at various heights and angles relative to the vehicle body 2.

Next, a universal support mechanism that supports the grapple device 8 will be described with new reference to Figure 9. Figure 9 is a cross-sectional view taken along line IX-IX in Figure 6.

First, as shown in Figure 6, the grapple device body 8c of the grapple device 8 is attached to the slide plate 10b of the rotary arm 10 via a universal support mechanism 26. This universal support mechanism 26 allows the grapple device 8 to rotate relative to the rotary arm 10 about the predetermined axis. That is, the universal support mechanism 26 includes a roll rotation mechanism 28, an intermediate member 30, and a pitch rotation mechanism 32. To be more specific, this universal support mechanism 26 allows the grapple device body 8c to rotate relative to the slide plate 10b about a roll axis 28a and about a pitch axis 32a. By allowing the grapple device 8 to rotate in this manner, the grapple device 8 can be oriented in such a way as to fit on a standing tree to be felled, so that the standing tree can be reliably held.

The roll rotation mechanism 28 is configured to couple the slide plate 10b to the intermediate member 30 of the universal support mechanism 26 in such a way as to be rotatable about the roll axis 28a. In the reference state of the felling work vehicle 1 shown in Figure 1, the roll axis 28a is oriented substantially horizontally in the front-rear direction of the felling work vehicle 1.

As shown in Figure 9, the roll rotation mechanism 28 includes an inner race 28b, an outer race 28c, and a plurality of ball bearings 28d, the inner race 28b being fixed to the slide plate 10b (Figure 6), the outer race 28c being fixed to the intermediate member 30, the plurality of ball bearings 28d being disposed between the inner race 28b and the outer race 28c. An opening 28e having a substantially square shape is provided at the center of the inner race 28b, and a rectangular shaft 28f having a substantially square cross section is received in the opening 28e in a state of being inclined at approximately 45 degrees. This rectangular shaft 28f is fixed to the intermediate member 30, and the center of the rectangular shaft 28f aligns with the roll axis 28a.

Elastically deformable roll dampers 28g are disposed between four corners of the opening 28e and the respective sides of the rectangular shaft 28f. With such a structure, when the intermediate member 30 is rotated relative to the slide plate 10b about the roll axis 28a, the roll dampers 28g disposed at the four corners of the opening 28e are compressed and deformed by the rectangular shaft 28f. That is, the roll dampers 28g bias the intermediate member 30 such that the intermediate member 30 is oriented in a predetermined direction relative to the slide plate 10b.

In the reference state shown in Figure 1, the grapple device 8 is oriented such that the respective grapples 8a and 8b are located in a horizontal plane, and the roll dampers 28g bias the intermediate member 30 such that the grapple device 8 is oriented in this direction. When a rotational force in the roll direction is exerted on the grapple device 8, the roll dampers 28g are elastically deformed, thereby allowing the grapple device 8 to be rotated in the roll direction. When the rotational force exerted is removed, the grapple device 8 is returned to the original direction by the restoring force of the roll dampers 28g. As described above, the roll rotation mechanism 28 of the universal support mechanism 26 elastically supports the grapple device 8 in such a way as to allow the grapple device 8 to be rotated relative to the rotary arm 10 about the roll axis. In the present embodiment, the roll rotation mechanism 28 allows the grapple device 8 to rotate in the left-right direction by approximately ±30 degrees.

Next, as shown in Figure 4 and Figure 6, the pitch rotation mechanism 32 is configured to couple the intermediate member 30 of the universal support mechanism 26 to the grapple device body 8c of the grapple device 8 in such a way as to be rotatable about the pitch axis 32a (Figure 6). In the reference state of the felling work vehicle 1 shown in Figure 1, the pitch axis 32a is a rotation axis that is oriented substantially horizontally in the width direction of the felling work vehicle 1, and the grapple device body 8c is supported in such a way as to be rotatable in the pitch direction relative to the intermediate member 30.

The pitch rotation mechanism 32 includes a support shaft 32b and a plurality of pitch dampers 32c, the support shaft 32b supporting the grapple device body 8c in such a way as to allow the grapple device body 8c to rotate relative to the intermediate member 30, the plurality of pitch dampers 32c being provided above and below this support shaft 32b. As shown in Figure 4, the pitch dampers 32c are elastically deformable members, and four pitch dampers 32c are attached to the intermediate member 30 and four pitch dampers 32c are attached to the grapple device body 8c (only four pitch dampers 32c being shown in Figure 4). That is, two pitch dampers 32c attached to the intermediate member 30 at a position above the support shaft 32b are in contact with two pitch dampers 32c attached to the grapple device body 8c to face the two pitch dampers 32c attached to the intermediate member 30. Two pitch dampers 32c attached to the intermediate member 30 at a position below the support shaft 32b are in contact with two pitch dampers 32c attached to the grapple device body 8c to face the two pitch dampers 32c attached to the intermediate member 30.

These pitch dampers 32c bias the grapple device body 8c such that the grapple device body 8c is oriented in a predetermined direction relative to the intermediate member 30. That is, in the reference state shown in Figure 1, the grapple device 8 is oriented such that the grapples 8a and 8b are located in a horizontal plane, and the pitch dampers 32c bias the grapple device body 8c such that the grapple device 8 is oriented in this direction. With such a structure, when a rotational force in the pitch direction is exerted on the grapple device 8, the pitch dampers 32c are elastically deformed, thereby allowing the grapple device 8 to be rotated about the pitch axis 32a. When the rotational force exerted is removed, the grapple device 8 is returned to the original direction by the restoring force of the pitch dampers 32c. As described above, the pitch rotation mechanism 32 of the universal support mechanism 26 elastically supports the grapple device 8 in such a way as to allow the grapple device 8 to be rotated relative to the rotary arm 10 about the pitch axis. In the present embodiment, the grapple device 8 is allowed to be rotated upward by approximately 15 degrees and downward by approximately 8 degrees from the reference state shown in Figure 1.

Next, as shown in Figure 2, the chain saw 12, which is a cutting device, is attached at the front end portion of the rotary frame 6 on one side, and is configured to be rotatable in a substantially horizontal plane. That is, the chain saw 12 is attached in such a way as to be rotatable about a support shaft 12a, which is provided at the front end portion of the rotary frame 6 on one side, and which is oriented in the substantially vertical direction. When the chain saw 12 is not in use, the chain saw 12 is oriented rearward relative to the support shaft 12a to extend in the front-rear direction of the felling work vehicle 1, and is housed in the rotary frame 6.

A cutting hydraulic cylinder 34 is provided in such a way as to extend substantially parallel to the chain saw 12 in a housed state, and this cutting hydraulic cylinder 34 is attached in such a way as to connect the proximal end portion of the chain saw 12 to the rear portion of the rotary frame 6. By extending or retracting the cutting hydraulic cylinder 34, the chain saw 12 can be rotated in a horizontal plane about the support shaft 12a. In cutting a standing tree with the chain saw 12, in a state in which a standing tree to be felled is held by the grapple device 8, the cutting hydraulic cylinder 34 is caused to retract to rotate the chain saw 12 forward by approximately 90 degrees. That is, the chain saw 12 is rotated forward by approximately 90 degrees from the position shown by a solid line in Figure 2 to the position shown by an imaginary line, and then cuts the held standing tree.

The chain saw 12 is configured to have a length slightly larger than the width of the recessed portion 6a of the rotary frame 6, the recessed portion 6a being open forward. Therefore, it is possible to reliably cut the standing tree that is held in a state of being received in the recessed portion 6a of the rotary frame 6. In the reference state shown in Figure 1, the rotary frame 6 is disposed at a position lower than the grapple device 8 and hence, the chain saw 12 cuts a standing tree at a position lower than the grapples 8a and 8b. Although the felling work vehicle 1 of the present embodiment includes the chain saw 12 as the cutting device, a cutting cutter blade (not shown in the drawing) may be provided as the cutting device.

Next, as shown in Figure 3, the winches 14 are provided on upper outer sides of the traveling device 4 in the width direction, and each winch 14 includes a drum 14a and a wire rope 14b, which is wound around the drum 14a. Each drum 14a is provided with a handle for manually rotating the drum 14a.

Each drum 14a is provided on the same center line as the driving sprocket 4c of the traveling device 4 (Figure 1), and is rotationally driven by the traveling motor 4e for driving the driving sprocket 4c (Figure 2). The drum 14a is connected to the driving sprocket 4c via a clutch device 14c, and when the clutch device 14c is engaged, the drum 14a is rotated together with the driving sprocket 4c. That is, each drum 14a is configured to be rotatable about an axis oriented horizontally in the width direction of the felling work vehicle 1, and can unwind and wind the wire rope 14b wound around the drum 14a. The drum 14a is driven by the traveling motor 4e, which drives the driving sprocket 4c of the traveling device 4, so that the drum 14a is rotationally driven in synchronization with the traveling motor 4e.

When work is performed in the downward direction on a steep slope by the felling work vehicle 1, with the clutch devices 14c disengaged, the wire ropes 14b are unwound from the winches 14 toward the rear (upward) of the felling work vehicle 1, and the distal ends of the wire ropes 14b are fixed to trees or a structure. By actuating the traveling devices 4 in this state with the clutch devices 14c engaged, the felling work vehicle 1 can safely move on the steep slope.

The drum 14a of each winch 14 is rotationally driven by the traveling motor 4e in synchronization with the driving sprocket 4c of the traveling device 4 and hence, it is possible to prevent significant loosening of the wire rope 14b and lifting of the front portion of the traveling device 4 caused by the wire rope 14b pulling the traveling device 4. That is, the diameter of the drum 14a, which winds the wire rope 14b, is substantially the same as the diameter of the pitch circle of the driving sprocket 4c and hence, the wire rope 14b is wound or unwound in synchronization with traveling of the felling work vehicle 1. Although the diameter of the drum 14a, which winds the wire rope 14b, varies depending on the amount of winding or the like of the wire rope 14b, when the difference between the diameter of the drum 14a and the diameter of the pitch circle of the driving sprocket 4c is within approximately ±5%, the wire rope 14b can be wound or unwound in synchronization with the traveling without causing a practical problem.

In the felling work vehicle 1 of the present embodiment, the winches 14 are included in the felling work vehicle 1. However, the present invention may also be configured such that the traveling of the felling work vehicle 1 is assisted by a tether system. That is, in the tether system, winches are fixed to a structure or the like disposed above the felling work vehicle 1, and the distal ends of wire ropes unwound from the winches are tethered to the felling work vehicle 1. By unwinding or winding the wire ropes from the winches in this state in synchronization with the traveling of the felling work vehicle 1, the traveling of the felling work vehicle 1 can be assisted.

Next, the engine 15, which is a prime mover, is configured to generate power that actuates the traveling motors 4e of the traveling devices 4, the tilt hydraulic cylinder 18, the opening and closing hydraulic cylinders 20a and 20b, the dump hydraulic cylinder 22, the slide hydraulic cylinder 24, the cutting hydraulic cylinder 34, and the like. That is, hydraulic pressure is generated by the engine 15, this hydraulic pressure is guided to the respective hydraulic motors and the respective hydraulic cylinders via control valves (not shown in the drawing), and the respective hydraulic motors and the respective hydraulic cylinders are actuated by the supplied hydraulic pressure. To be more specific, by opening or closing the respective control valves (not shown in the drawing), the supply or cutoff of hydraulic pressure to the respective hydraulic motors and the respective hydraulic cylinders are controlled, and the supplied hydraulic pressure causes the respective hydraulic motors to rotate and the respective hydraulic cylinders to extend or retract. In the present embodiment, the engine 15 is constituted of two internal combustion engines. Therefore, even in a case in which one of these internal combustion engines is stopped, hydraulic pressure can be generated, so that the minimum functions of the felling work vehicle 1, such as traveling by the traveling devices 4, can be maintained, so that felling work can be safely performed.

The engine 15 is supported at the rear upper portion of the vehicle body 2 via a pair of brackets 15a extending from the vehicle body 2. Support shafts 15b, which extend substantially horizontally in the width direction of the felling work vehicle 1, are provided at the distal end portions of these brackets 15a, and the engine 15 is supported in such a way as to be rotatable about these support shafts 15b. In the present embodiment, the engine 15 can rotate forward by approximately 20 degrees and rearward by approximately 25 degrees from the state shown in Figure 1. Consequently, also when the felling work vehicle 1 travels on a slope, the engine 15 can be maintained in a state close to horizontal, so that impairment of the function of the engine 15 can be prevented. Also in a case in which the felling work vehicle 1 of the present embodiment is disposed on a steep slope inclined at approximately 45 degrees in the front-rear direction, the function of the engine 15 can be maintained.

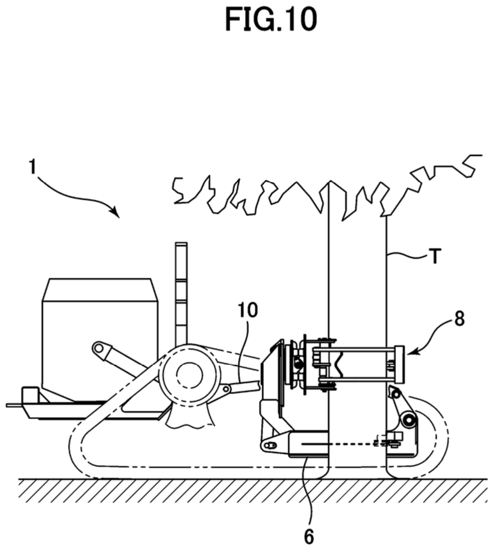

Next, the manner of operation of the felling work vehicle 1 according to the first embodiment of the present invention will be described with reference to Figure 10 to Figure 20.

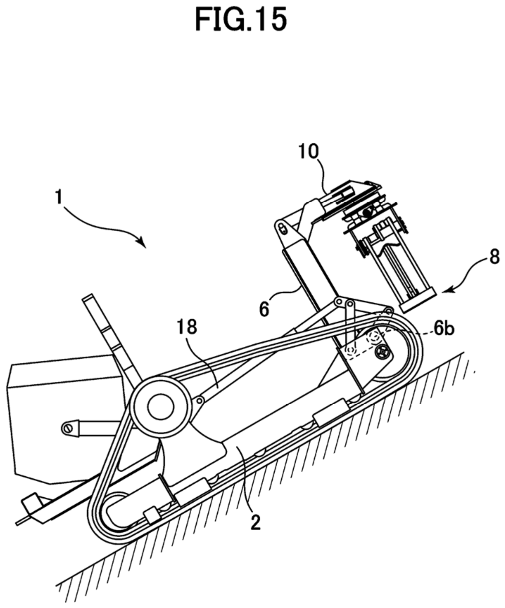

Figure 10 to Figure 14 are diagrams showing a work procedure in which a standing tree is felled and transported on flat ground by the felling work vehicle 1 of the present embodiment. Figure 15 to Figure 17 are diagrams showing a work procedure in which a standing tree is felled on an upslope (where the ground is higher on the front side of the felling work vehicle 1) by the felling work vehicle 1 of the present embodiment. Figure 18 to Figure 20 are diagrams showing a work procedure in which a standing tree is felled on a downslope (where the ground is lower on the front side of the felling work vehicle 1) by the felling work vehicle 1 of the present embodiment.

The felling work vehicle 1 of the present embodiment is equipped with a transceiver (not shown in the drawing), and the respective hydraulic motors and the respective hydraulic cylinders are actuated based on control signals received by this transceiver. Accordingly, by sending instructions from a safe place to the transceiver (not shown in the drawing) of the felling work vehicle 1 using the controller (not shown in the drawing) located near the operator performing felling work, the operator can safely perform work described below. A global positioning system (GPS) is mounted in the transceiver (not shown in the drawing), so that the locations where standing trees are cut can be easily specified. In addition, the present invention may also be configured such that path to a site where trees are cut is stored, and the felling work vehicle 1 returns by automatically traveling along this path.

First, in a case in which a standing tree is felled on flat ground, as shown in Figure 10, the felling work vehicle 1 is caused to travel to a position at which a standing tree T to be felled is received in the recessed portion 6a of the rotary frame 6. At this point of operation, it is preferable that the rotary frame 6 and the rotary arm 10 be in a reference state shown in Figure 1. Next, in the state in which the standing tree T to be felled is received in the recessed portion 6a, the opening and closing hydraulic cylinders 20a and 20b (Figure 6) are actuated, thereby holding the standing tree T with the grapples 8a and 8b of the grapple device 8. In general, a standing tree does not extend completely perpendicular to the ground. However, the grapple device 8 is elastically supported on the rotary arm 10 by the universal support mechanism 26 and hence, the grapple device 8 can be automatically oriented in an appropriate direction.

In this state, the chain saw 12 is actuated, and the cutting hydraulic cylinder 34 (Figure 2) is caused to retract to rotate the chain saw 12 forward from the position shown by the solid line in Figure 2 to the position shown by the imaginary line in Figure 2. Consequently, the standing tree T is substantially horizontally cut in a direction substantially parallel to the rotary frame 6.

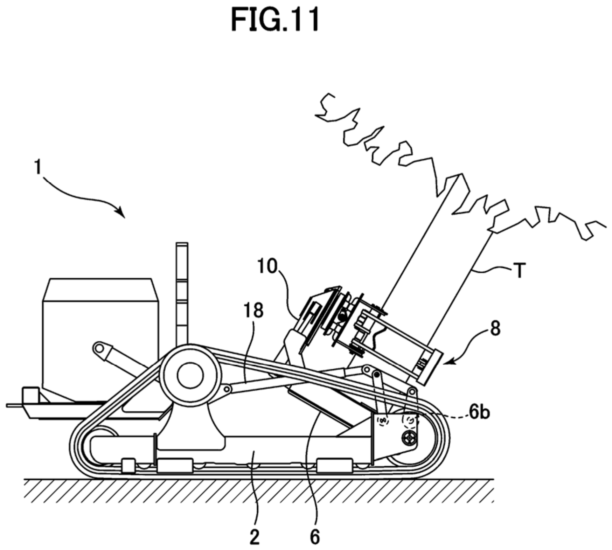

Next, as shown in Figure 11, in the state in which the cut standing tree T is held by the grapple device 8, the tilt hydraulic cylinder 18 is actuated to rotate the rotary frame 6 forward, thereby causing the cut standing tree to be felled toward the front of the vehicle body 2. The rotary frame 6 is rotated about the rotation axis 6b (Figure 2) of the rotary frame 6, and the rotation axis 6b is located forward of the cut standing tree T. Therefore, the cut standing tree T is lifted up from the stump and felled forward.

As a result, when the cut standing tree T is felled, there is no possibility of the cut standing tree T actually coming into contact with the stump, and therefore there is no possibility of a reaction force being exerted on the felling work vehicle 1 due to contact between the cut standing tree T and the stump. Consequently, the standing tree T that is to be felled after being cut can be easily controlled by rotating the rotary frame 6, thereby allowing the standing tree T to be felled in the direction intended by the operator, and thus enabling felling work to be performed safely. The cut standing tree T is felled forward due to its own weight. When the cut standing tree T is felled, the tilt hydraulic cylinder 18 applies torque to the rotary frame 6 in a direction opposite to the felling direction of the standing tree T, thereby reducing the felling speed of the standing tree T. To be more specific, hydraulic pressure is supplied to the tilt hydraulic cylinder 18 via a counterbalance valve (not shown in the drawing), thereby preventing the tilt hydraulic cylinder 18 from rapidly extending when the standing tree T is felled. That is, the tilt hydraulic cylinder 18 extends slowly in such a way as to resist felling of the standing tree T, thereby applying torque to the rotary frame 6 in a direction opposite to the felling direction of the standing tree T and, as a result, the standing tree T is gradually felled. Accordingly, the tilt hydraulic cylinder 18 serves as a torque applying device that applies torque to the rotary frame 6. Consequently, it is possible to prevent the occurrence of an overturning accident of the felling work vehicle 1 and damage to the device caused by a reaction force exerted on the vehicle during felling.

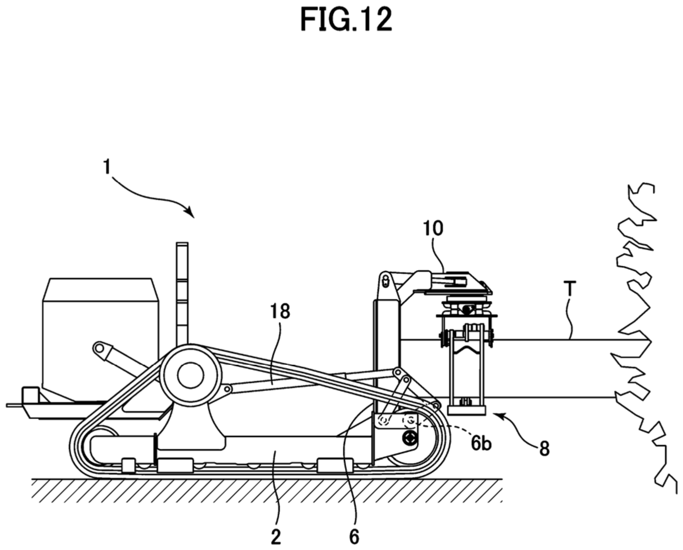

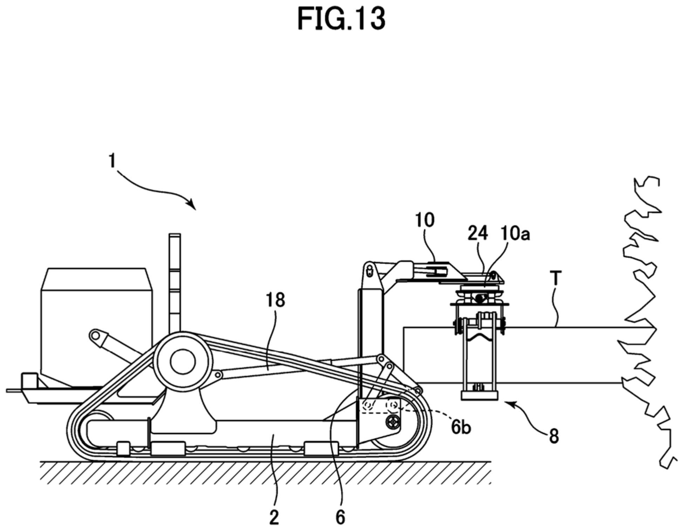

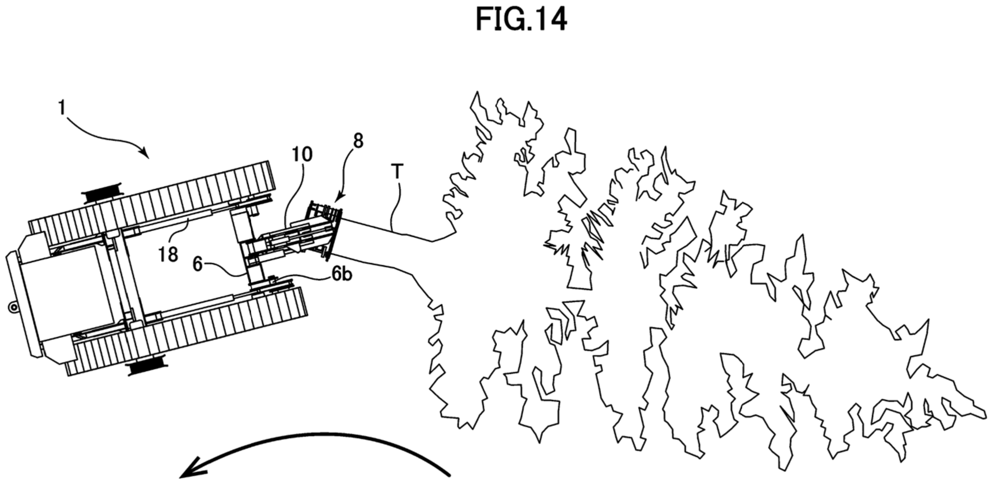

After the standing tree is cut, as shown in Figure 12, the rotary frame 6 is rotated until the cut standing tree T becomes substantially parallel to the ground. By causing the felling work vehicle 1 to travel rearward in this state, the cut standing tree T can be transported. In transporting the cut standing tree T, as shown in Figure 13, the slide hydraulic cylinder 24 is caused to extend to slide the slide plate 10b relative to the rotary arm 10 in the extending direction. Consequently, the root of the cut standing tree T moves toward the front of the felling work vehicle 1. As a result, also when the felling work vehicle 1 in a state of transporting the cut standing tree T turns as shown in Figure 14, the root of the standing tree T is less likely to interfere with the front portion of the felling work vehicle 1, thereby allowing the felling work vehicle 1 to turn relatively freely. The grapple device 8 is supported on the rotary arm 10 via the universal support mechanism 26. Therefore, when the felling work vehicle 1 in a state of transporting the standing tree T travels along a curve, the standing tree T is allowed to be rotated relative to the rotary arm 10 about the roll axis 28a, thereby enabling smooth transportation of the standing tree T.

The felling work vehicle 1 of the present embodiment automatically measures the diameter of the standing tree felled by the vehicle, and also automatically counts the number of standing trees felled by the vehicle. These data are stored in a control device (not shown in the drawing) in association with tree species inputted by the operator through the controller (not shown in the drawing) before felling work is performed, the control device being incorporated in the felling work vehicle 1. The data stored in the control device in this manner may be extracted after the completion of the work, and may be utilized for recording the felling work or for data aggregation.

Next, a work procedure in which a standing tree is felled on an upslope (where the ground is higher on the front side of the felling work vehicle 1) will be described with reference to Figure 15 to Figure 17.

First, when the felling work vehicle 1 is caused to travel on an upslope, it is preferable that, as shown in Figure 15, the felling work vehicle 1 be caused to travel in a state in which the rotary frame 6 is rotated by approximately 90 degrees from the reference state shown in Figure 1.

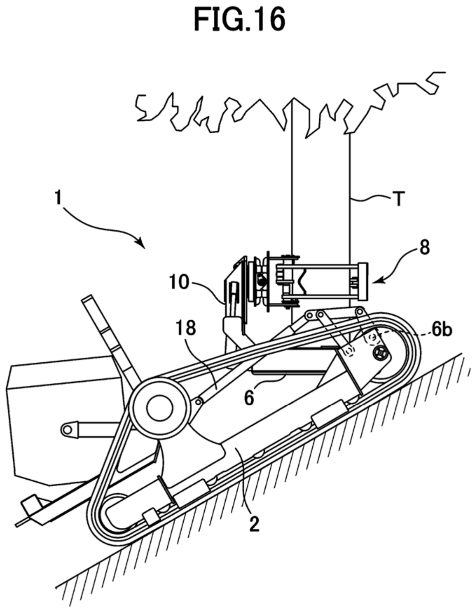

Next, after the felling work vehicle 1 approaches a standing tree to be felled, as shown in Figure 16, the rotary frame 6 is rotated to extend in a direction substantially perpendicular to the standing tree T. In the example shown in Figure 16, the standing tree T extends in the vertical direction and hence, the rotary frame 6 is oriented substantially horizontally. The felling work vehicle 1 is further caused to travel to a position at which the standing tree T to be felled is received in the recessed portion 6a of the rotary frame 6. Next, in the state in which the standing tree to be felled is received in the recessed portion 6a, the standing tree T is held by the grapple device 8. At this point of operation, the grapple device 8 is automatically oriented in an appropriate direction by the universal support mechanism 26.

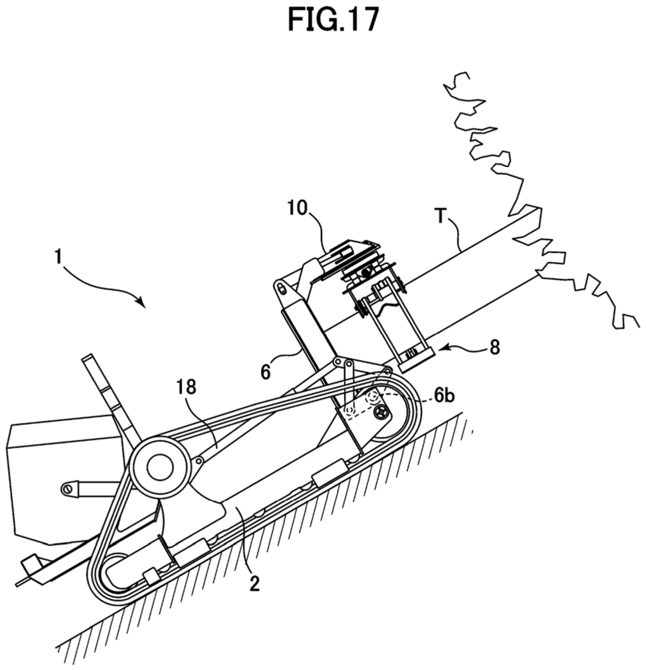

In this state, the chain saw 12 is actuated, and is rotated forward, thereby cutting the standing tree in a direction substantially parallel to the rotary frame 6. In the example shown in Figure 16, the standing tree T extends in the substantially vertical direction, and the rotary frame 6 is oriented in the substantially horizontal direction and hence, the standing tree T is cut in the horizontal direction. Next, as shown in Figure 17, in the state in which the cut standing tree T is held by the grapple device 8, the rotary frame 6 is rotated forward, thereby causing the cut standing tree T to be felled toward the front of the vehicle body 2. Also in this case, the rotary frame 6 is rotated about the rotation axis 6b, and the cut standing tree T is lifted up from the stump and felled forward. The transporting work of the cut standing tree T is the same as that in the case in which a standing tree T is felled on flat ground and hence, the repeated description will be omitted. In performing felling work on an upslope, a standing tree is cut in the substantially horizontal direction. After the standing tree T is transported, the stump remaining after the standing tree T is horizontally cut may be cut in a direction substantially parallel to the slope by the chain saw 12 to prevent high stumps from remaining on the forest land.

Next, a work procedure in which a standing tree is felled on a downslope (where the ground is lower on the front side of the felling work vehicle 1) will be described with reference to Figure 18 to Figure 20.

First, after the felling work vehicle 1 approaches a standing tree to be felled, as shown in Figure 18, the rotary arm 10 is rotated relative to the rotary frame 6 by actuating the dump hydraulic cylinder 22, thereby making the rotary arm 10 substantially parallel to the standing tree to be felled. At this point of operation, the rotary frame 6 may also be rotated by actuating the tilt hydraulic cylinder 18, thereby making the rotary arm 10 substantially parallel to the standing tree when necessary.

In the example shown in Figure 18, the standing tree extends in the vertical direction and hence, the rotary arm 10 is oriented substantially vertically. The felling work vehicle 1 is further caused to travel to a position at which the standing tree to be felled is received in the recessed portion 6a of the rotary frame 6. Next, in the state in which the standing tree to be felled is received in the recessed portion 6a, the standing tree is held by the grapple device 8. At this point of operation, the grapple device 8 is automatically oriented in an appropriate direction by the universal support mechanism 26.

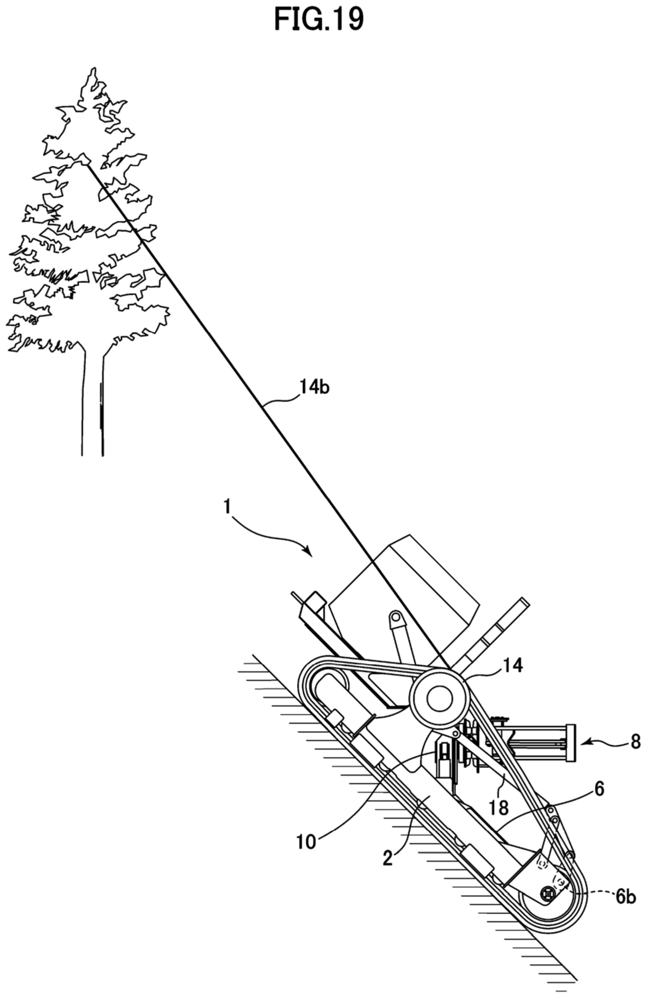

In a case in which a slope is steep, as shown in Figure 19, the wire ropes 14b are unwound rearward from the respective winches 14, and the distal ends of the respective wire ropes 14b are fixed to trees or the like located at positions higher than the felling work vehicle 1. The felling work vehicle 1 is caused to move forward while the wire ropes 14b are unwound from the respective drums 14a of the winches 14 in synchronization with traveling of the felling work vehicle 1. Consequently, the felling work vehicle 1 can safely and stably travel also on a steep slope.

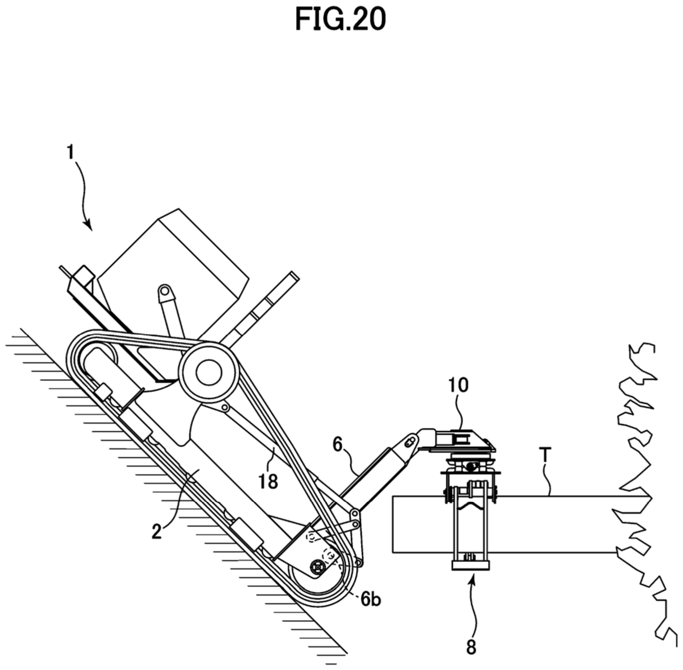

In the state in which the standing tree is held by the grapple device 8, the chain saw 12 is actuated, and is rotated forward, thereby cutting the standing tree T in a direction substantially parallel to the rotary frame 6. In the example shown in Figure 18, the standing tree T extends in the substantially vertical direction, and the rotary frame 6 is oriented in a direction substantially parallel to the slope and hence, the standing tree T is cut in the direction substantially parallel to the slope. Next, as shown in Figure 20, in the state in which the cut standing tree T is held by the grapple device 8, the rotary frame 6 is rotated forward, thereby causing the cut standing tree to be felled toward the front of the vehicle body 2. Also in this case, the rotary frame 6 is rotated about the rotation axis 6b, and the cut standing tree is lifted up from the stump and felled forward. The transporting work of the cut standing tree is the same as that in the case in which a standing tree is felled on flat ground and hence, the repeated description will be omitted.

According to the felling work vehicle 1 of the first embodiment of the present invention, the rotation axis 6b (Figure 2), about which the rotary frame 6 is rotated when a standing tree T is felled, is located forward of the standing tree T, which is held by the grapple device 8, with respect to the vehicle body 2. Therefore, the cut standing tree T is lifted up from the stump by rotating the rotary frame 6, and therefore the standing tree T held by the grapple device 8 is reliably felled by using the rotation axis 6b of the rotary frame 6 as a fulcrum. As a result, a felling direction of the cut standing tree T can be made stable, so that felling work can be safely performed.

According to the felling work vehicle 1 of the present embodiment, the grapple device 8 is supported by the rotary arm 10 that is rotatable about the axis extending in the width direction of the vehicle body 2 and hence, the grapples 8a and 8b of the grapple device 8 can also be brought into contact, at a substantially right angle, with the standing tree T growing on a slope (Figure 18), so that the standing tree T can be reliably held by the grapple device 8.

According to the felling work vehicle 1 of the present embodiment, the universal support mechanism 26 (Figure 4, Figure 6, and Figure 9) allows the grapple device 8 to rotate relative to the rotary arm 10 and hence, the direction of the grapple device 8 can be easily aligned with the direction of a standing tree T to be held, so that the standing tree T can be reliably held.

According to the felling work vehicle 1 of the present embodiment, the universal support mechanism 26 elastically supports the grapple device 8 in such a way as to allow the grapple device 8 to rotate (Figure 4 and Figure 9) and hence, an elastic force that returns the grapple device 8 to the original direction is exerted on the grapple device 8. Consequently, after a standing tree T held by the grapple device 8 is cut, the grapple device 8 is returned to the original direction by the elastic force, and therefore the direction of the held standing tree T can be made stable.

According to the felling work vehicle 1 of the present embodiment, the rotary arm 10 is configured to be extendable (Figure 4 and Figure 13), and the grapple device 8 is spaced apart from the rotary frame 6 and hence, when the felled standing tree T is transported (Figure 14), the root of the felled standing tree T is distant from the front portion of the felling work vehicle 1. As a result, when the felling work vehicle 1 in a state of transporting the standing tree T turns or the like, the front portion of the felling work vehicle 1 is less likely to interfere with the root of the standing tree T and hence, transporting work is facilitated.

According to the felling work vehicle 1 of the present embodiment, the chain saw 12, which is a cutting device, cuts a standing tree T to be felled at a position lower than the rotation axis 6b (Figure 4) and hence, also in a case in which the standing tree T has a large diameter, the cut standing tree T is reliably lifted up from the stump when the standing tree is felled, so that contact between the cut standing tree T and the stump can be reliably avoided. Consequently, the felling direction of the standing tree T can be made more stable.

According to the felling work vehicle 1 of the present embodiment, the felling speed of a standing tree T is reduced by the tilt hydraulic cylinder 18, which is the torque applying device, and hence, the cut standing tree T can be slowly felled, and therefore it is possible to prevent the occurrence of an overturning accident of the felling work vehicle 1 and damage to the device caused by a reaction force exerted on the vehicle during felling.

According to the felling work vehicle 1 of the present embodiment, the drums 14a of the winches 14 unwind or wind the wire ropes 14b in synchronization with the traveling devices 4 and hence, when the felling work vehicle 1 travels with assistance from the winches 14, significant loosening of the wire ropes 14b and lifting of one end of the felling work vehicle 1 caused by the wire ropes 14b pulling the felling work vehicle 1 can be prevented, thereby allowing the felling work vehicle 1 to travel stably.

According to the felling work vehicle 1 of the present embodiment, the engine 15, which is the prime mover, is supported on the vehicle body 2 in such a way as to be rotatable about the substantially horizontal axis and hence, also in a case in which felling work is performed on inclined ground by the felling work vehicle 1, the engine 15 can be maintained in a state close to horizontal, so that the engine 15 can be reliably operated.

According to the felling work vehicle 1 of the present embodiment, the cutting device is the chain saw 12 and hence, tree species that cannot be cut with a cutter blade can also be cut, and the weight of the cutting device can be reduced.

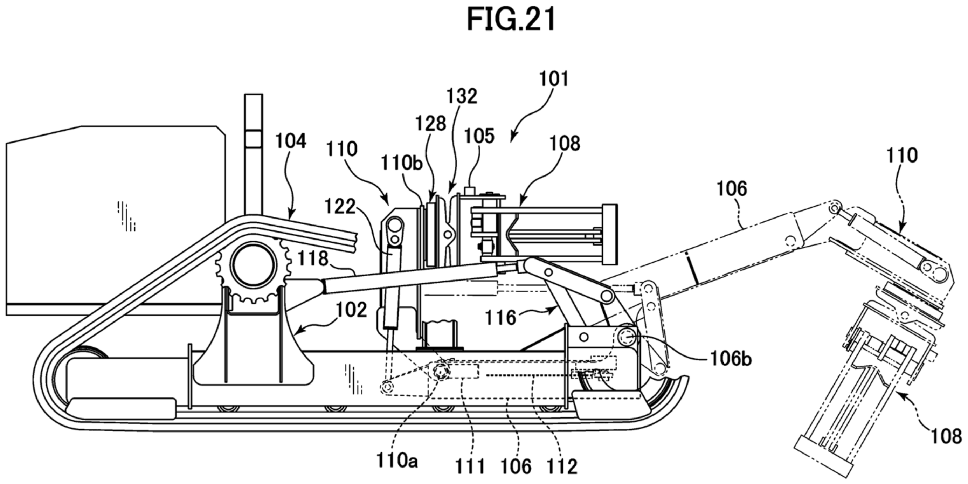

Next, a felling work vehicle according to a second embodiment of the present invention will be described with reference to Figure 21 to Figure 28.

The felling work vehicle of the present embodiment differs from that of the above-described first embodiment in the connection structure between the rotary arm and the rotary frame, and in a direction in which the rotary arm is movable. Accordingly, in the description made hereinafter, only points that make the second embodiment of the present invention different from the first embodiment will be described, and the repeated description for the same configuration and the same manner of operation and advantageous effects will be omitted.

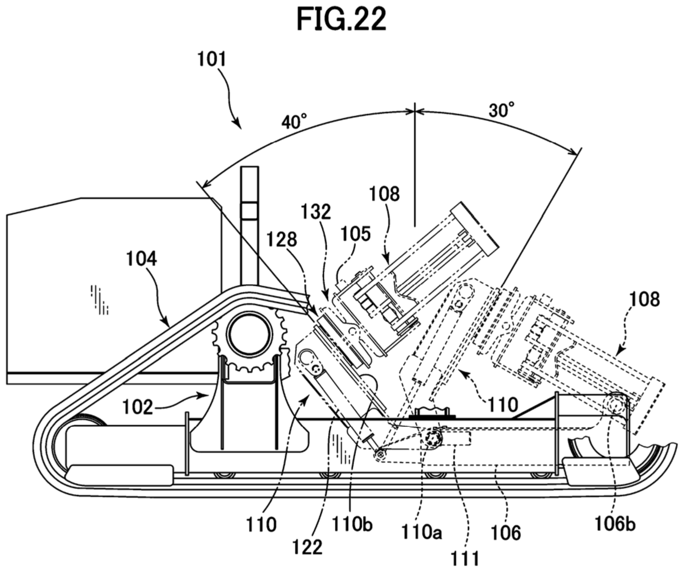

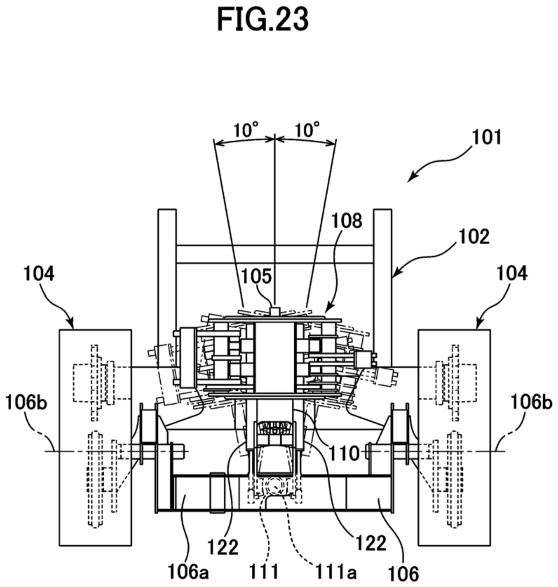

Figure 21 is a side view of the felling work vehicle according to the second embodiment of the present invention, and shows a range within which the rotary frame can be rotated. Figure 22 is a side view of the felling work vehicle according to the second embodiment of the present invention, and shows a range within which the rotary arm can be rotated in the pitch direction. Figure 23 is a front view of the felling work vehicle according to the second embodiment of the present invention, and shows a range within which the rotary arm can be rotated in the roll direction.

As shown in Figure 21, a felling work vehicle 101 according to the second embodiment of the present invention includes a vehicle body 102, a pair of traveling devices 104, and a rotary frame 106, the pair of traveling devices 104 being provided on both sides of the vehicle body 102 in the width direction, the rotary frame 106 being disposed between the traveling devices 104. A grapple device 108 is coupled to the rotary frame 106 via a rotary arm 110, the grapple device 108 being configured to grasp a standing tree to be felled. A camera 105 is attached to the upper surface of the grapple device 108, the camera 105 imaging an area in front of the felling work vehicle 101. A chain saw 112, which is a cutting device, is attached to the rotary frame 106. The configurations of the vehicle body 102 and the traveling devices 104 are the same as those in the first embodiment and hence, the repeated description will be omitted.

The rotary frame 106 attached to the vehicle body 102 is also rotatable about a rotation axis 106b in the same manner as the above-described first embodiment. Also in the present embodiment, the rotary frame 106 is a member formed to have a substantially U shape as viewed from above, and is configured to be rotatable in the forward direction about the rotation axis 106b oriented in the width direction of the vehicle body 102 in a horizontal plane. That is, as shown in Figure 21, the rotary frame 106 is configured to be rotatable in a forward range of approximately 160 degrees from the reference state shown by a solid line, in which the rotary frame 106 is oriented in the substantially horizontal direction, to a position shown by a chain line. As described above, the configurations of a link mechanism 116 and a tilt hydraulic cylinder 118 for tilting (rotating) the rotary frame 106 forward are also the same as those in the first embodiment and hence, the repeated description will be omitted.

Next, as shown in Figure 22, the rotary arm 110 is attached to the rotary frame 106 in such a way as to be rotatable about a transverse support shaft 110a in the front-rear direction. The transverse support shaft 110a is a shaft oriented in the width direction of the vehicle body 102 in a horizontal plane, and the rotary arm 110 can be rotated relative to the rotary frame 106 about the transverse support shaft 110a. That is, in the reference state shown by the solid line in Figure 21, the rotary arm 110 is oriented in a direction substantially perpendicular to the rotary frame 106, that is, in the substantially vertical direction. In the present embodiment, as shown in Figure 22, the rotary arm 110 can be rotated forward by approximately 30 degrees and rearward by approximately 40 degrees from the reference state shown in Figure 21. When the rotary arm 110 is in a position at which the rotary arm 110 is rotated forward by approximately 30 degrees, an angle formed by the rotary frame 106 and the rotary arm 110 is approximately 60 degrees, whereas when the rotary arm 110 is in a position at which the rotary arm 110 is rotated rearward by approximately 40 degrees, the angle formed by the rotary frame 106 and the rotary arm 110 is approximately 130 degrees.

Both the configuration in which a slide plate 110b is attached to the front surface side of the rotary arm 110 and the configuration in which the grapple device 108 is attached to the slide plate 110b via a roll rotation mechanism 128 and a pitch rotation mechanism 132 are also the same as those in the above-described first embodiment. Therefore, also in the present embodiment, the rotary arm 110 is configured to be extendable and hence, it is possible to move the grapple device 108, which is attached to the slide plate 110b, in the upward and downward direction in the reference state. The grapple device 108 is elastically supported on the slide plate 110b by the roll rotation mechanism 128 and the pitch rotation mechanism 132, thereby being allowed to perform roll motion and pitch motion relative to the rotary arm 110 within predetermined areas.

As shown in Figure 23, the rotary arm 110 is attached to the rotary frame 106 in such a way as to be rotatable about a longitudinal support shaft 111a in the left-right direction. The longitudinal support shaft 111a is a shaft oriented in the front-rear direction of the vehicle body 102 in a horizontal plane, and the rotary arm 110 can be rotated relative to the rotary frame 106 about the longitudinal support shaft 111a. That is, the longitudinal support shaft 111a is provided along an axis extending in the front-rear direction of the vehicle body 102, and the rotary arm 110 can be rotated about this axis extending in the front-rear direction of the vehicle body 102. Consequently, the rotary arm 110 can be rotated about the longitudinal support shaft 111a by approximately 10 degrees in each of the left and right directions, from the reference state shown by a solid line in Figure 23 to a position shown by a chain line. In the present embodiment, the longitudinal support shaft 111a is disposed to intersect with the above-described transverse support shaft 110a at one point, and the rotary arm 110 can be rotated in the front-rear direction and in the left-right direction about this point of intersection.

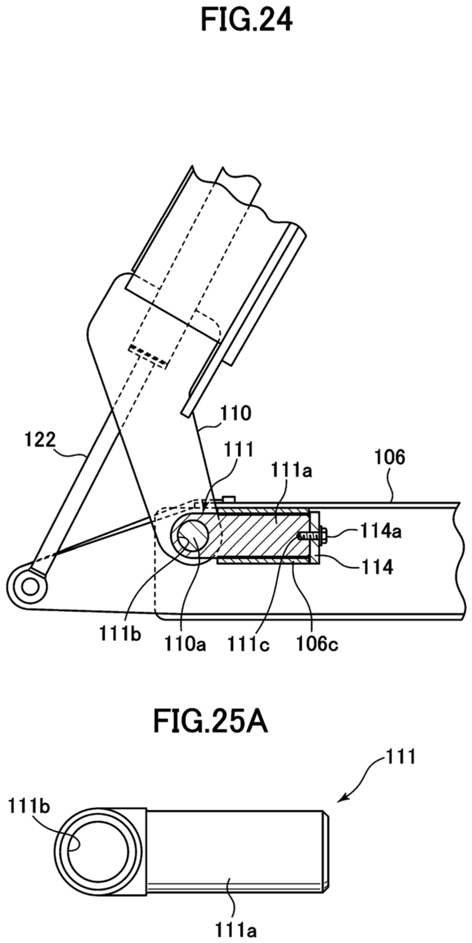

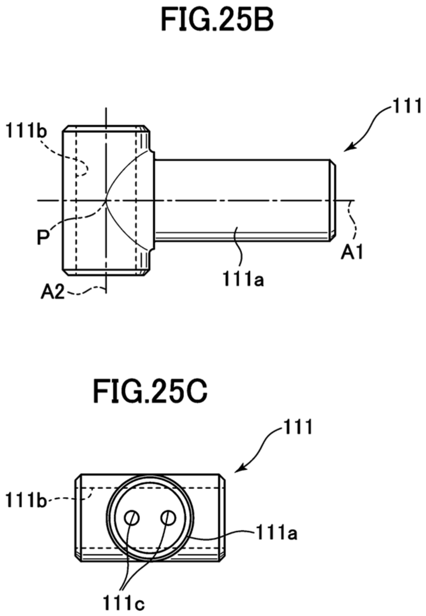

Next, the connection structure between the rotary frame and the rotary arm will be described with new reference to Figure 24 and Figure 25.

Figure 24 is a side view showing a connection portion between the rotary frame and the rotary arm in an enlarged manner. Figure 25A is a side view of a swing pin that connects the rotary frame and the rotary arm, Figure 25B is a top plan view of the swing pin, and Figure 25C is a front view of the swing pin.

As shown in Figure 24, the rotary frame 106 and the rotary arm 110 are connected via a swing pin 111. As shown in Figure 25B, the swing pin 111 is a member which has a substantially T shape as viewed from above, and in which the longitudinal support shaft 111a and a bearing portion 111b are integrally formed to have a substantially T shape, the longitudinal support shaft 111a extending in the front-rear direction of the felling work vehicle 101 and having a columnar shape, the bearing portion 111b extending in the width direction of the felling work vehicle 101 and having a cylindrical shape. The rotary arm 110 is coupled to the rotary frame 106 via the swing pin 111, thus being allowed to rotate in the front-rear direction and in the left-right direction about a point of intersection P between a center axis A1 of the longitudinal support shaft 111a and a center axis A2 of the bearing portion 111b.

The bearing portion 111b of the swing pin 111 rotatably receives the transverse support shaft 110a, which is a shaft attached to extend in the width direction of the felling work vehicle 101 in a horizontal plane, and fixed to the rotary arm 110. Consequently, the rotary arm 110 is coupled to the swing pin 111 in such a way as to be rotatable about the transverse support shaft 110a (the center axis A2) in the front-rear direction.

The longitudinal support shaft 111a of the swing pin 111 is rotatably received in a bearing member 106c fixed to the rotary frame 106. The bearing member 106c is a cylindrical member, and is fixed at the center of the rotary frame 106 in the width direction in such a way as to extend in the front-rear direction in a horizontal plane. The inner peripheral surface of the bearing member 106c serves as a bearing that receives the longitudinal support shaft 111a of the swing pin 111. Consequently, the swing pin 111 is coupled to the rotary frame 106 in such a way as to be rotatable about the longitudinal support shaft 111a (the center axis A1) in the left-right direction.

As shown in Figure 25C, two female screw holes 111c are provided at the distal end of the longitudinal support shaft 111a. As shown in Figure 24, a pressing plate 114, which is a circular plate, is fixed at the distal end of the longitudinal support shaft 111a with two bolts 114a (only one bolt 114a being shown in Figure 24). That is, the pressing plate 114 is fixed relative to the respective female screw holes 111c with the two bolts 114a with the longitudinal support shaft 111a of the swing pin 111 being inserted in the bearing member 106c, thereby preventing the longitudinal support shaft 111a from being removed from the bearing member 106c.

By coupling the rotary frame 106 and the rotary arm 110 via the swing pin 111 in this manner, the rotary arm 110 is allowed to be rotated relative to the rotary frame 106 in the front-rear direction and in the left-right direction. That is, the transverse support shaft 110a of the rotary arm 110 rotates in the bearing portion 111b of the swing pin 111, thereby allowing the rotary arm 110 to rotate relative to the rotary frame 106 in the front-rear direction as shown in Figure 22. In addition, the longitudinal support shaft 111a of the swing pin 111 rotates in the bearing member 106c fixed to the rotary frame 106, thereby allowing the rotary arm 110 to rotate relative to the rotary frame 106 in the left-right direction as shown in Figure 23.

As shown in Figure 22 and Figure 23, dump swing hydraulic cylinders 122 are provided on both left and right sides of the swing pin 111 (only one dump swing hydraulic cylinder 122 being shown in Figure 22). As shown in Figure 22, each of these dump swing hydraulic cylinders 122 is provided to couple the rear end portion of the rotary frame 106 to the back surface side of the rotary arm 110. By causing these dump swing hydraulic cylinders 122 to retract in synchronization with each other (by causing both dump swing hydraulic cylinders 122 to retract to have the same length), the rotary arm 110 is dumped (rotated) rearward relative to the rotary frame 106 as shown by a chain line in Figure 22. By causing the dump swing hydraulic cylinders 122 to extend in synchronization with each other, the rotary arm 110 is dumped (rotated) forward relative to the rotary frame 106 as shown by a broken line in Figure 22.

In contrast, as shown in Figure 23, by causing one dump swing hydraulic cylinder 122 to extend, and by causing the other dump swing hydraulic cylinder 122 to retract, the rotary arm 110 can be swung in the left-right direction. That is, by causing the dump swing hydraulic cylinder 122 on the right side in Figure 23 to retract, and by causing the dump swing hydraulic cylinder 122 on the left side in Figure 23 to extend, the rotary arm 110 is rotated rightward relative to the rotary frame 106 about the longitudinal support shaft 111a. In contrast, by causing the dump swing hydraulic cylinder 122 on the right side to extend, and by causing the dump swing hydraulic cylinder 122 on the left side to retract, the rotary arm 110 is rotated leftward about the longitudinal support shaft 111a. As described above, in the felling work vehicle 101 of the present embodiment, by extending or retracting each of the two dump swing hydraulic cylinders 122, the rotary arm 110 can be dumped in the front-rear direction relative to the rotary frame 106 (Figure 22), and can also be swung in the left-right direction relative to the rotary frame 106 (Figure 23).

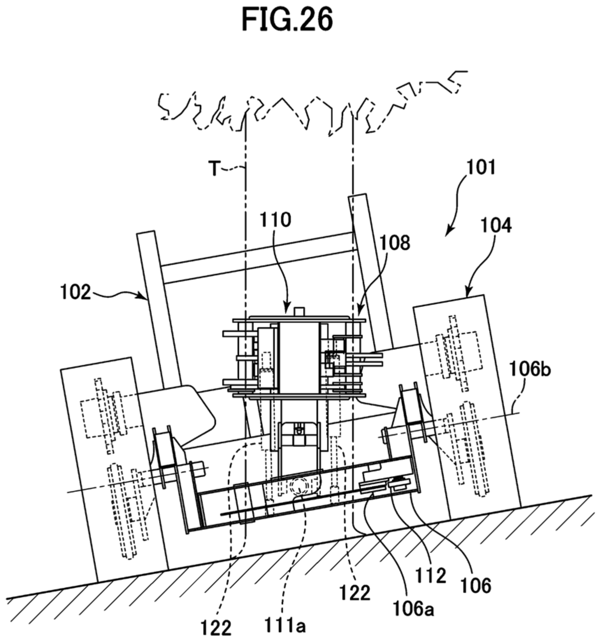

Next, the manner of operation of the felling work vehicle 101 according to the second embodiment of the present invention will be described with reference to Figure 26 to Figure 28.

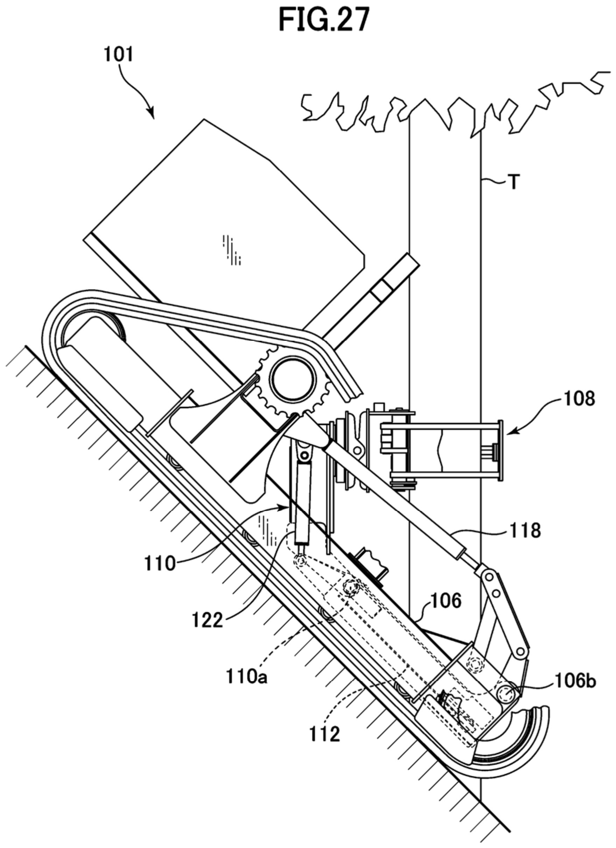

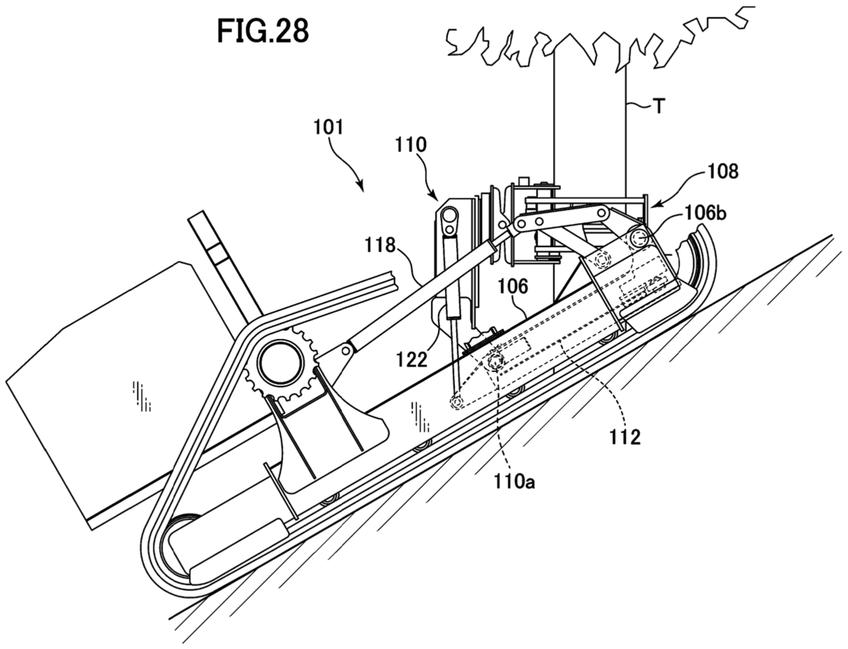

Figure 26 is a diagram showing felling work of a standing tree on a slope with a lateral gradient by the felling work vehicle of the present embodiment. Figure 27 is a diagram showing felling work of a standing tree on a downslope by the felling work vehicle of the present embodiment. Figure 28 is a diagram showing felling work of a standing tree on an upslope by the felling work vehicle of the present embodiment.

First, in a case in which, as shown in Figure 26, a standing tree is felled on a slope with a lateral gradient (a slope where the ground height differs between the right side and the left side of the felling work vehicle 101), the rotary arm 110 is swung in the roll direction. That is, by causing one of the two dump swing hydraulic cylinders 122 to extend, and by causing the other of the two dump swing hydraulic cylinders 122 to retract, the rotary arm 110 is rotated in the roll direction relative to the rotary frame 106 about the longitudinal support shaft 111a. Consequently, the rotary arm 110 can be made substantially parallel to a standing tree T growing in the vertical direction on the slope with the lateral gradient. In this state, the rotary arm 110 is oriented substantially vertically. In contrast, the rotary frame 106 is maintained in the reference state shown in Figure 21, and the rotary frame 106 is oriented in a direction substantially parallel to the slope.

Next, the felling work vehicle 101 is caused to travel to a position at which the standing tree T is received in a recessed portion 106a of the rotary frame 106. Further, in the state in which the standing tree T is received in the recessed portion 106a, the grapples of the grapple device 108 are rotated, thereby holding the standing tree T with the grapple device 108. At this point of operation, the rotary arm 110 is rotated in the roll direction so as to be oriented substantially parallel to the standing tree T and hence, the grapples of the grapple device 108 can be brought into contact, at a substantially right angle, with the standing tree T, so that the grapple device 108 can firmly hold the standing tree T. Next, in the state in which the standing tree T is held, the chain saw 112 provided to the rotary frame 106 is actuated to cut the standing tree T at a position lower than the grapple device 108. The chain saw 112 is rotated in a plane substantially parallel to the rotary frame 106 to cut the standing tree T, so that the standing tree T is cut along a plane substantially parallel to the slope.

After the standing tree T is cut, in the state in which the standing tree T is held by the grapple device 108, the tilt hydraulic cylinder 118 (Figure 21) is caused to extend, thereby tilting (rotating) the rotary frame 106 forward about the rotation axis 106b. Consequently, the standing tree T can be felled toward the front of the felling work vehicle 101. After the standing tree T is felled, the standing tree T is transported by causing the felling work vehicle 101 to travel with the standing tree T held by the grapple device 108 in the same manner as the above-described first embodiment. As described above, according to the felling work vehicle 101 of the present embodiment, the rotary arm 110 can be rotated in the roll direction relative to the rotary frame 106 and hence, also a standing tree T growing on a slope with a lateral gradient can be held by the grapple device 108 and then felled. Therefore, it is unnecessary to correct the direction of orientation of the felling work vehicle 101 according to the inclination direction of the slope, so that felling work can proceed smoothly.

Next, in a case in which, as shown in Figure 27, a standing tree is felled on a downslope (a slope where the ground is lower on the front side of the felling work vehicle 101), the rotary arm 110 is dumped (rotated) rearward. That is, by causing the two dump swing hydraulic cylinders 122 to retract by the same length, the rotary arm 110 is rotated rearward in the pitch direction relative to the rotary frame 106 about the transverse support shaft 110a. Consequently, the rotary arm 110 can be made substantially parallel to the standing tree T growing in the vertical direction on the downslope. In this state, the rotary arm 110 is oriented substantially vertically, whereas the rotary frame 106 is oriented in a direction substantially parallel to the slope.

Next, the felling work vehicle 101 is caused to travel to a position at which the standing tree T is received in the recessed portion 106a of the rotary frame 106. Further, the standing tree T is held by the grapple device 108, and the chain saw 112 is actuated in such a state, thereby cutting the standing tree T at a position lower than the grapple device 108. In cutting the standing tree T, the chain saw 112 is rotated in a plane substantially parallel to the rotary frame 106 to cut the standing tree T, so that the standing tree T is cut along a plane substantially parallel to the slope.

After the standing tree T is cut, in the state in which the standing tree T is held, the tilt hydraulic cylinder 118 is caused to extend, thereby tilting (rotating) the rotary frame 106 forward about the rotation axis 106b. Consequently, the standing tree T can be felled toward the front of the felling work vehicle 101. After the standing tree T is felled, the standing tree T is transported in the same manner as the above-described first embodiment. As described above, according to the felling work vehicle 101 of the present embodiment, the rotary arm 110 can be dumped rearward relative to the rotary frame 106 and hence, in the state in which the rotary frame 106 is maintained parallel to the slope, a standing tree T growing on a slope with a downward gradient can be held by the grapple device 108. As a result, the standing tree T can be cut along a plane parallel to the slope and then felled. Therefore, also a standing tree T growing on a downslope can be cut at a low position along a plane parallel to the slope and hence, the stump remaining after the standing tree T is cut is less likely to hinder subsequent felling work.

Next, in a case in which, as shown in Figure 28, a standing tree is felled on an upslope (a slope where the ground is higher on the front side of the felling work vehicle 101), the rotary arm 110 is dumped (rotated) forward. That is, by causing the two dump swing hydraulic cylinders 122 to extend by the same length, the rotary arm 110 is rotated forward in the pitch direction relative to the rotary frame 106 about the transverse support shaft 110a. Consequently, the rotary arm 110 can be made substantially parallel to the standing tree T growing in the vertical direction on the upslope, without rotating the rotary frame 106 (in a state in which the rotary frame 106 is maintained in the reference state shown in Figure 21). In this state, the rotary arm 110 is oriented substantially vertically, whereas the rotary frame 106 is oriented in a direction substantially parallel to the slope.

Next, the felling work vehicle 101 is caused to travel to a position at which the standing tree T is received in the recessed portion 106a of the rotary frame 106. Further, the standing tree T is held by the grapple device 108, and the chain saw 112 is actuated in such a state, thereby cutting the standing tree T at a position lower than the grapple device 108. In cutting the standing tree T, the chain saw 112 is rotated in a plane substantially parallel to the rotary frame 106 to cut the standing tree T and hence, the standing tree T is cut along a plane substantially parallel to the slope.

After the standing tree T is cut, in the state in which the standing tree T is held, the tilt hydraulic cylinder 118 is caused to extend, thereby tilting (rotating) the rotary frame 106 forward about the rotation axis 106b. Consequently, the standing tree T can be felled toward the front of the felling work vehicle 101. After the standing tree T is felled, the standing tree T is transported in the same manner as the above-described first embodiment. As described above, according to the felling work vehicle 101 of the present embodiment, the rotary arm 110 can be dumped forward relative to the rotary frame 106 and hence, in the state in which the rotary frame 106 is maintained in the reference state, a standing tree T growing on a slope with an upward gradient can be held by the grapple device 108. As a result, the standing tree T can be cut along a plane parallel to the slope. The standing tree T growing on an upslope is cut at a low position along a plane parallel to the slope in this manner and hence, the stump remaining after the standing tree T is cut has a low height, thus being less likely to hinder subsequent felling work.

Figure 27 shows an example of felling of a standing tree T on a downslope, and Figure 28 shows an example of felling of a standing tree T on an upslope. Figure 26 shows an example of felling of a standing tree T on a slope inclined in the left-right direction. However, the felling work vehicle 101 of the present embodiment can also cause a standing tree T growing on a general slope inclined both in the front-rear direction (upslope or downslope) and the left-right direction to be held by the grapple device 108 and cut. In this case, the rotary arm 110 is dumped (rotated) relative to the rotary frame 106 about the transverse support shaft 110a and, at the same time, is swung (rotated) about the longitudinal support shaft 111a, thereby causing the rotary arm 110 to be oriented in a direction substantially parallel to the standing tree T. Therefore, the standing tree T can be held by the grapple device 108 and then cut without requiring significant consideration of a direction of a slope on which the standing tree T grows (a direction in which the slope has the largest inclination angle) and of a direction of the vehicle body 102.

As has been described above, felling work of a standing tree T includes: a step of aligning the rotary arm 110 with a direction in which the standing tree T extends; a step of causing the felling work vehicle 101 to travel to a position that allows the standing tree T to be held; a step of holding the standing tree T with the grapple device 108; a step of cutting the held standing tree T with the cutting device; a step of causing the cut standing tree T to be felled forward by rotating the rotary frame 106; and a step of transporting the felled standing tree T. The present invention may also be configured such that the felling work vehicle 101 includes a controller (not shown in the drawing) that can execute the respective steps, and a part or the whole of the above-mentioned respective steps is automatically executed. In such a case, the present invention may be configured such that the controller executes the respective steps based on images imaged by the camera 105 provided to the felling work vehicle 101.

According to the felling work vehicle 101 of the second embodiment of the present invention, the grapple device 108 is supported by the rotary arm 110, which is rotatable (Figure 23) about the axis (the longitudinal support shaft 111a) extending in the front-rear direction of the vehicle body 102, and hence, the grapples of the grapple device 108 can also be brought into contact, at a substantially right angle, with a standing tree T growing on a slope inclined in the left-right direction of the vehicle body 102 (Figure 26), so that the standing tree T can be reliably held by the grapple device 8.

According to the felling work vehicle 101 of the present embodiment, the grapple device 108 is configured such that also in the case in which a standing tree T grows on an upslope or a downslope, the grapple device 108 is capable of holding the standing tree T with the rotary frame 106 maintained substantially parallel to the upslope or the downslope (Figure 27 and Figure 28) and hence, also in the case in which the standing tree T grows on the slope, the standing tree T can be cut at a low position along a direction substantially parallel to the slope. As a result, the stump obtained after the standing tree T is felled can have a low height and hence, when the standing tree T is felled and then a next standing tree T is felled, the stump is less likely to hinder next felling work, so that felling work can proceed smoothly.

According to the felling work vehicle 101 of the present embodiment, the grapple device 108 can also hold the standing tree T growing on the slope inclined in the left-right direction of the vehicle body 102 (Figure 26) and hence, felling work can be performed without aligning the front-rear direction of the vehicle body 102 with the inclination direction of the slope, so that felling work can proceed smoothly.

Although the preferred embodiments of the present invention have been described heretofore, various modifications may be added to the above-described embodiments. Particularly, although the rotary frame is directly attached to the vehicle body in the above-described embodiments, the rotary frame may be attached to the vehicle body via another fixed or movable member.

### [Reference Signs List]

- 1: felling work vehicle
- 2: vehicle body
- 2a: longitudinal member
- 2b: transverse member
- 2c: coupling member
- 2d: pole
- 4: traveling device
- 4a: front driven wheel
- 4b: rear driven wheel
- 4c: driving sprocket
- 4d: crawler
- 4e: traveling motor
- 5a: light
- 5b: speaker
- 5c: safety light
- 5d: vehicle body camera
- 5e: proximity camera
- 6: rotary frame
- 6a: recessed portion
- 6b: rotation axis
- 6c: support shaft
- 8: grapple device
- 8a, 8b: grapple
- 8c: grapple device body
- 8d: support shaft
- 8e: synchronizing link
- 10: rotary arm
- 10a: support shaft
- 10b: slide plate
- 12: chain saw (cutting device)
- 12a: support shaft
- 14: winch
- 14a: drum
- 14b: wire rope
- 14c: clutch device
- 15: engine (prime mover)
- 15a: bracket
- 15b: support shaft
- 16: link mechanism
- 16a, 16b, 16c: link
- 18: tilt hydraulic cylinder (torque applying device)
- 20a, 20b: opening and closing hydraulic cylinder
- 22: dump hydraulic cylinder
- 24: slide hydraulic cylinder
- 26: universal support mechanism
- 28: roll rotation mechanism
- 28a: roll axis
- 28b: inner race
- 28c: outer race
- 28d: ball bearing
- 28e: opening
- 28f: rectangular shaft
- 28g: roll damper
- 30: intermediate member
- 32: pitch rotation mechanism
- 32a: pitch axis
- 32b: support shaft
- 32c: pitch damper
- 34: cutting hydraulic cylinder
- 101: felling work vehicle
- 102: vehicle body
- 104: traveling device
- 105: camera
- 106: rotary frame
- 106b: rotation axis
- 106c: bearing member
- 108: grapple device
- 110: rotary arm
- 110a: transverse support shaft
- 110b: slide plate
- 111: swing pin
- 111a: longitudinal support shaft
- 111b: bearing portion
- 111c: female screw hole
- 112: chain saw (cutting device)
- 116: link mechanism
- 118: tilt hydraulic cylinder
- 122: dump swing hydraulic cylinder
- 128: roll rotation mechanism
- 132: pitch rotation mechanism

## Claims

1. A felling work vehicle that fells a standing tree, the felling work vehicle comprising:
a vehicle body;
a pair of traveling devices provided on both sides of the vehicle body in a width direction;
a rotary frame disposed between the pair of traveling devices, and having a recessed portion that receives, from a front side, a standing tree to be felled;
a grapple device connected to the rotary frame, including a grapple configured to grasp the standing tree to be felled from a side, with the standing tree received in the recessed portion of the rotary frame; and
a cutting device configured to cut the standing tree, which is held by the grapple device, at a position lower than the grapple,
wherein the rotary frame is mounted to the vehicle body so as to be rotatable about a rotation axis extending in the width direction of the vehicle body, the rotation axis being positioned forward of the standing tree held by the grapple device relative to the vehicle body, and the standing tree, once cut, is lifted and felled toward the front of the vehicle body by rotation of the rotary frame.

2. The felling work vehicle according to claim 1, further comprising a rotary arm configured to support the grapple device, wherein the rotary arm is attached to the rotary frame so as to be rotatable about an axis extending in the width direction of the vehicle body, and supports the grapple device at a position above the rotary frame.

3. The felling work vehicle according to claim 1, further comprising a rotary arm configured to support the grapple device, wherein the rotary arm is attached to the rotary frame so as to be rotatable about an axis extending in a front-rear direction of the vehicle body, and supports the grapple device at a position above the rotary frame.

4. The felling work vehicle according to claim 2 or 3, wherein the grapple device is attached to the rotary arm via a universal support mechanism, and the universal support mechanism allows the grapple device to rotate relative to the rotary arm about a predetermined axis.

5. The felling work vehicle according to claim 4, wherein the universal support mechanism elastically supports the grapple device so as to allow the grapple device to rotate relative to the rotary arm about the predetermined axis.

6. The felling work vehicle according to claim 2 or 3, wherein the rotary arm is configured to be extendable such that the grapple device is spaced apart from the rotary frame.

7. The felling work vehicle according to claim 1, wherein the cutting device is configured to cut the standing tree to be felled, at a position lower than the rotation axis.

8. The felling work vehicle according to claim 1, further comprising a torque applying device, wherein when the standing tree, once cut, is felled by rotating the rotary frame, the torque applying device applies torque to the rotary frame in a direction opposite to a felling direction of the standing tree to reduce a felling speed of the standing tree.

9. The felling work vehicle according to claim 1, further comprising a winch configured to assist traveling of the traveling device, wherein a drum of the winch is configured to unwind or wind a wire rope in synchronization with the traveling device.

10. The felling work vehicle according to claim 1, further comprising a prime mover configured to generate power that actuates the traveling device, wherein the prime mover is supported on the vehicle body so as to be rotatable about a substantially horizontal axis.

11. The felling work vehicle according to claim 1, wherein the cutting device is a chain saw rotatably attached to the rotary frame.

12. The felling work vehicle according to claim 2, wherein the grapple device is configured such that also in a case in which the standing tree to be felled grows on an upslope or a downslope, the grapple device is capable of holding the standing tree with the rotary frame maintained substantially parallel to the upslope or the downslope, and the cutting device is configured to cut the standing tree in a plane substantially parallel to the rotary frame.

13. The felling work vehicle according to claim 3, wherein the grapple device is configured such that also in a case in which the standing tree to be felled grows on a slope inclined in a left-right direction of the vehicle body, the grapple device is capable of holding the standing tree, and the cutting device is configured to cut the standing tree held by the grapple device.

14. The felling work vehicle according to claim 3, wherein the grapple device is configured such that also in a case in which the standing tree to be felled grows on a slope inclined in the front-rear direction of the vehicle body and also inclined in the left-right direction of the vehicle body, the grapple device is capable of holding the standing tree, and the cutting device is configured to cut the standing tree held by the grapple device.
